# FASCICULE DE BREVET EUROPEEN

(11) **EP 1 514 707 B1**
(45) Date de publication et mention de la délivrance du brevet: **18.10.2006**
(21) Numéro de dépôt: 04019011.8
(22) Date de dépôt: 11.08.2004
(51) Int. Cl.: B60H 1/00

(54) **Gestion aérothermique perfectionnée dans un dispositif de chauffage et/ou climatisation d' habitacle**
Verbesserte Lufttemperatursteuerung einer Heiz- und/oder Klimaanlage einer Fahrgastzelle
Improved air temperature control of a passenger cell heating and/or air conditioning device

(30) Priorité: 12.09.2003 FR 0310749
(43) Date de publication de la demande: 16.03.2005
(73) Titulaire: VALEO SYSTEMES THERMIQUES, 78320 Le Mesnil Saint-Denis (FR)
(72) Inventeur: Vincent, Philippe, 28230 Epernon (FR); Carton, Thomas, 78310 Maurepas (FR)

(56) Documents cités:
- DE-C- 3 826 182
- FR-A- 2 765 526
- FR-A- 2 787 393
- FR-A- 2 788 019
- FR-A- 2 794 069

## Description

L'invention concerne le domaine des dispositifs de chauffage et/ou climatisation d'habitacle, notamment de véhicule automobile.

Elle concerne plus particulièrement les dispositifs de chauffage et/ou climatisation d'habitacle comprenant au moins un conduit d'alimentation en flux d'air froid, au moins un conduit d'alimentation en flux d'air chaud logeant un radiateur de chauffage, au moins des premier et second conduits de distribution de flux d'air, au moins une chambre de mixage d'air communiquant avec les conduits d'alimentation et avec les premier et second conduits de distribution, et des moyens de contrôle comprenant des premier et deuxième volets munis chacun de parois d'obturation respectives et montés pivotant autour d'un axe de manière à être entraînés en rotation, éventuellement simultanément et dans la même direction, pour gérer, éventuellement conjointement, l'accès des flux d'air froid et flux d'air chaud à une partie amont de la chambre de mixage.

Un dispositif de ce type permet, en particulier lorsque ses premier et deuxième volets sont respectivement de type tambour et drapeau, comme décrit dans le document FR 2787393, de favoriser le mélange des flux d'air froid et flux d'air chaud au niveau de la chambre de mixage, qui constitue alors une chambre de mixage. On obtient ainsi une température homogène dans la chambre de mixage.

Or, dans de nombreuses situations, il est nécessaire, pour des questions de confort aérothermique, de délivrer les flux d'air traités au niveau de certaines bouches de distribution d'air de l'habitacle, selon des températures différentes. En outre, dans ce type de dispositif, la section du conduit d'air chaud est généralement contrainte par la forme du deuxième volet, laquelle ne permet pas toujours de garantir de façon optimale un niveau requis de débit d'air chaud dans certains modes de fonctionnement. Enfin, dans ce type de dispositif, le circuit, qu'emprunte le flux d'air chaud dans la chambre de mixage, en mode "tout chaud", pour gagner le second conduit de distribution, généralement dédié aux pieds des passagers, est "accidenté", ce qui induit une importante perte de charge qui se traduit par des problèmes de bruit et de niveau de débit d'air.

L'invention a donc pour but d'améliorer la situation.

Elle propose à cet effet un dispositif de chauffage et/ou climatisation d'habitacle, notamment de véhicule automobile, du type de celui présenté dans l'introduction, et comprenant des moyens de canalisation chargés de canaliser une partie au moins des flux d'air froid et/ou flux d'air chaud qui parviennent en amont de la chambre de mixage pour la délivrer en au moins un endroit choisi de cette chambre de mixage.

Le dispositif selon l'invention peut se décliner selon de nombreuses variantes, dont certaines au moins des caractéristiques peuvent être combinées entre-elles, et notamment:
- des moyens de canalisation comprenant au moins un canal comportant une entrée débouchant en amont de la chambre de mixage et au moins une sortie débouchant au niveau de l'endroit choisi dans une partie aval de la chambre de mixage.
   ► Par exemple, l'entrée du canal peut déboucher dans le conduit d'alimentation en flux d'air froid, et l'accès à cette entrée est contrôlé par une partie conformée du premier volet.
   ► Le canal peut être défini par des parois du boîtier. En variante, le canal peut être délimité par une paroi du boîtier et par une face externe de la paroi d'obturation du premier volet. Dans ce cas, la face externe peut être conformée localement ou sur toute sa hauteur. Par ailleurs, la paroi du boîtier peut être conformée localement ou sur toute sa hauteur.
   ► La sortie du canal peut déboucher à proximité d'une entrée du premier conduit de distribution,
- des moyens de canalisation comprenant un déflecteur placé sur le second volet et chargé de canaliser une partie au moins du flux d'air chaud vers l'endroit choisi, dans la partie amont de la chambre de mixage, lorsque le second volet libère au moins partiellement l'accès à la chambre de mixage.
   ► Le déflecteur peut être constitué par une déformation de la paroi d'obturation du second volet, sur toute sa hauteur.
   ►Le déflecteur peut être constitué par une déformation locale de la paroi d'obturation du second volet.
   ► Les moyens de canalisation peuvent comprendre une ouverture constituée dans la paroi d'obturation du premier volet,
- des moyens de canalisation comprenant au moins un canal placé sur le second volet et destiné à canaliser une partie au moins du flux d'air chaud vers l'endroit choisi, dans la partie aval de la chambre de mixage, lorsque le second volet libère au moins partiellement l'accès à cette chambre de mixage.
   ► Le canal peut faire partie intégrante de la paroi d'obturation du second volet.
   ► Le canal peut s'étendre sur toute la hauteur du second volet ou sur une partie de la hauteur de la paroi d'obturation du second volet,
- des moyens de canalisation comprenant au moins un canal placé sur le premier volet et destiné à canaliser une partie au moins du flux d'air froid vers l'endroit choisi, dans la partie aval de la chambre de mixage, lorsque le premier volet libère au moins partiellement l'accès à la chambre de mixage.
   ► Le canal peut faire partie intégrante du premier volet.
   ► Le canal peut s'étendre sur une partie de la hauteur du second volet,
- des moyens de canalisation comprenant au moins une paroi auxiliaire fixe obstruant partiellement l'accès du flux d'air froid à la chambre de mixage et canalisant une partie du flux d'air chaud vers l'endroit choisi, dans la partie aval de la chambre de mixage, lorsque le premier volet libère au moins partiellement l'accès à cette chambre de mixage,
- des moyens de canalisation comprenant au moins une paroi auxiliaire fixe obstruant partiellement l'accès du flux d'air chaud à la chambre de mixage et canalisant une partie du flux d'air froid vers l'endroit choisi, dans la partie aval de la chambre de mixage, lorsque le premier volet libère au moins partiellement l'accès à la chambre de mixage,
- des moyens de canalisation comprenant au moins une cloison placée dans un plan sensiblement perpendiculaire à la paroi d'obturation du premier volet et agencée pour coopérer avec la paroi auxiliaire pour canaliser le flux d'air chaud ou d'air froid,
- des moyens de canalisation comprenant au moins une première paroi auxiliaire solidaire du second volet, placée dans la partie aval et canalisant une partie du flux d'air froid et/ou une partie du flux d'air chaud vers une zone de la partie aval dont la position varie en fonction des positions des premier et second volets. En variante ou en complément, les moyens de canalisation peuvent comprendre au moins une seconde paroi auxiliaire prolongeant la paroi d'obturation du premier volet dans la partie aval et canalisant une partie du flux d'air froid et/ou une partie du flux d'air chaud vers une zone de la partie aval dont la position varie en fonction des positions des premier et second volets. En présence, à la fois de première et seconde parois auxiliaires, celles-ci sont préférentiellement placées à des niveaux différents afin de canaliser les parties de flux d'air à des niveaux différents de la zone,
- des moyens de canalisation comprenant un élément de canalisation solidaire du premier volet, placée dans la partie aval et chargée de canaliser une partie du flux d'air froid et/ou une partie du flux d'air chaud vers une zone de la partie aval dont la position varie en fonction des positions des premier et second volets. Dans ce cas, la zone peut être placée à proximité d'une entrée du premier conduit de distribution,
- une tige, munie d'une première extrémité solidarisée à l'axe de rotation et d'une seconde extrémité montée à rotation sur une première extrémité du premier volet, et un chemin de came dans lequel peut se déplacer un axe de rotation monté sur une seconde extrémité du premier volet afin de permettre son déplacement dans la partie aval de la chambre de mixage. Dans ce cas, la paroi d'obturation du premier volet peut comporter une déformation locale qui définit un canal communiquant avec la chambre de mixage et chargé de canaliser une partie du flux d'air froid et/ou une partie du flux d'air chaud vers une zone de la partie aval dont la position varie en fonction des positions des premier et second volets. En variante, la paroi d'obturation du premier volet peut être agencée de manière à canaliser une partie du flux d'air froid et/ou une partie du flux d'air chaud vers une zone de la partie aval,
- le premier volet peut comporter au moins deux tiges solidarisées d'une part à sa paroi d'obturation et d'autre part à l'axe de rotation et agencées de manière à canaliser une partie du flux d'air froid et/ou une partie du flux d'air chaud vers l'une au moins des faces latérales délimitant la chambre de mixage. On peut également prévoir au moins une sortie latérale placée dans une partie aval de la chambre de mixage. Dans ce cas, les tiges peuvent être agencées de manière à permettre la canalisation d'une partie du flux d'air froid et/ou d'une partie du flux d'air chaud vers la sortie latérale. En variante ou en complément, on peut prévoir une paroi auxiliaire fixe obstruant partiellement l'accès du flux d'air froid à la chambre de mixage et chargées de permettre l'appui de la paroi d'obturation du premier volet en vue d'interdire tout accès du flux d'air froid à la chambre de mixage lorsque le premier volet est dans une position fermée,
- des moyens de canalisation comprenant un chemin de came placé dans la partie aval, une paroi de canalisation sur laquelle est monté un axe propre à se déplacer dans le chemin de came et une tige muni d'une première extrémité solidaire de l'axe de rotation et d'une seconde extrémité montée à rotation sur la paroi de canalisation de manière à la déplacer dans la partie aval pour qu'elle canalise une partie du flux d'air froid et/ou une partie du flux d'air chaud vers une zone de la partie aval dont la position varie en fonction des positions des premier et second volets,
- un chemin de came placé en aval du radiateur dans le conduit d'alimentation en flux d'air chaud, et des moyens de canalisation comprenant, d'une part, un troisième volet couplé par une tige de liaison au premier volet et gérant l'accès, selon sa position, d'une partie au moins du flux d'air froid à une partie amont de la chambre de mixage et/ou à une partie du conduit d'alimentation en flux d'air chaud placée en amont du radiateur, et d'autre part, une paroi auxiliaire constituant le second volet et comportant une première extrémité pourvue d'un premier axe monté à rotation sur le second volet, et une seconde extrémité pourvue d'un second axe propre à se déplacer dans le chemin de came de manière à canaliser conjointement avec le second volet une partie du flux d'air froid et/ou une partie du flux d'air chaud vers une zone de la partie amont de la chambre de mixage. Dans ce cas, le troisième volet est par exemple de type papillon,
- des moyens de canalisation comprenant des cloisons solidaires entre-elles, installées dans la chambre de mixage et définissant dans celle-ci des canaux alimentés en flux d'air froid et/ou en flux d'air chaud selon les positions respectives des premier et second volets et chargés de délivrer le flux d'air froid et/ou le flux d'air chaud en des zones respectives différentes de la partie aval de la chambre de mixage en fonction de leurs localisations respectives,
- un premier volet de type tambour,
- un second volet de type drapeau.

D'autres caractéristiques et avantages de l'invention apparaîtront à l'examen de la description détaillée ci-après, et des dessins annexés, sur lesquels :
- la figure 1 illustre de façon schématique, dans une vue en coupe transversale médiane, une partie d'un premier mode de réalisation de dispositif de chauffage et/ou climatisation de véhicule automobile, selon l'invention,
- la figure 2 illustre de façon schématique, dans une vue en coupe transversale médiane, une partie d'un deuxième mode de réalisation de dispositif de chauffage et/ou climatisation de véhicule automobile, selon l'invention,
- la figure 3 est une vue en coupe transversale selon l'axe III-III de la figure 2,
- la figure 4 illustre de façon schématique, dans une vue en coupe transversale médiane, une partie d'un troisième mode de réalisation de dispositif de chauffage et/ou climatisation de véhicule automobile, selon l'invention,
- la figure 5 est une vue en coupe transversale selon l'axe V-V de la figure 4,
- la figure 6 illustre de façon schématique, dans une vue en coupe transversale médiane, une partie d'un quatrième mode de réalisation de dispositif de chauffage et/ou climatisation de véhicule automobile, selon l'invention,
- la figure 7 détaille, dans une vue en perspective, l'exemple d'ensemble de volet tambour-drapeau de la figure 6,
- la figure 8 illustre de façon schématique, dans une vue en coupe transversale médiane, une partie d'un cinquième mode de réalisation de dispositif de chauffage et/ou climatisation de véhicule automobile, selon l'invention,
- la figure 9 illustre une variante d'ensemble de volet tambour-drapeau pour le dispositif de la figure 8,
- la figure 10 illustre de façon schématique, dans une vue en coupe transversale médiane, une partie d'un sixième mode de réalisation de dispositif de chauffage et/ou climatisation de véhicule automobile, selon l'invention,
- la figure 11 détaille, dans une vue en perspective, l'exemple d'ensemble de volet tambour-drapeau et de nervures de canalisation associées, de la figure 10,
- la figure 12 illustre de façon schématique, dans une vue en coupe transversale médiane, une partie d'un septième mode de réalisation de dispositif de chauffage et/ou climatisation de véhicule automobile, selon l'invention,
- la figure 13 détaille, dans une vue en perspective, l'exemple d'ensemble de volet tambour-drapeau et de nervures de canalisation associées, de la figure 12,
- la figure 14 illustre de façon schématique, dans une vue en coupe transversale médiane, une partie d'un huitième mode de réalisation de dispositif de chauffage et/ou climatisation de véhicule automobile, selon l'invention,
- la figure 15 détaille, dans une vue en perspective, l'exemple d'ensemble de volet tambour-drapeau de la figure 14,
- la figure 16 illustre de façon schématique, dans une vue en coupe transversale médiane, une partie d'un neuvième mode de réalisation de dispositif de chauffage et/ou climatisation de véhicule automobile, selon l'invention,
- la figure 17 illustre de façon schématique, dans une vue en coupe transversale médiane, une partie d'un dixième mode de réalisation de dispositif de chauffage et/ou climatisation de véhicule automobile, selon l'invention,
- la figure 18 détaille, dans une vue en perspective, l'exemple de premier volet de la figure 17,
- la figure 19 illustre de façon schématique, dans une vue en coupe transversale médiane, une partie d'un onzième mode de réalisation de dispositif de chauffage et/ou climatisation de véhicule automobile, selon l'invention,
- la figure 20 illustre de façon schématique, dans une vue en coupe transversale médiane, une partie d'un douzième mode de réalisation de dispositif de chauffage et/ou climatisation de véhicule automobile, selon l'invention,
- les figures 21A à 21C illustrent de façon schématique, dans des vues en coupe transversale médiane, trois positions de fonctionnement différentes d'une partie d'un treizième mode de réalisation de dispositif de chauffage et/ou climatisation de véhicule automobile, selon l'invention,
- la figure 22 illustre de façon schématique, dans une vue en coupe transversale, une partie d'un quatorzième mode de réalisation de dispositif de chauffage et/ou climatisation de véhicule automobile, selon l'invention, et
- la figure 23 est une vue en coupe selon l'axe brisé XXIII-XXIII de la figure 22.

Les dessins annexés pourront non seulement servir à compléter l'invention, mais aussi contribuer à sa définition, le cas échéant.

L'invention concerne un dispositif de chauffage et/ou climatisation d'un habitacle, par exemple de véhicule automobile.

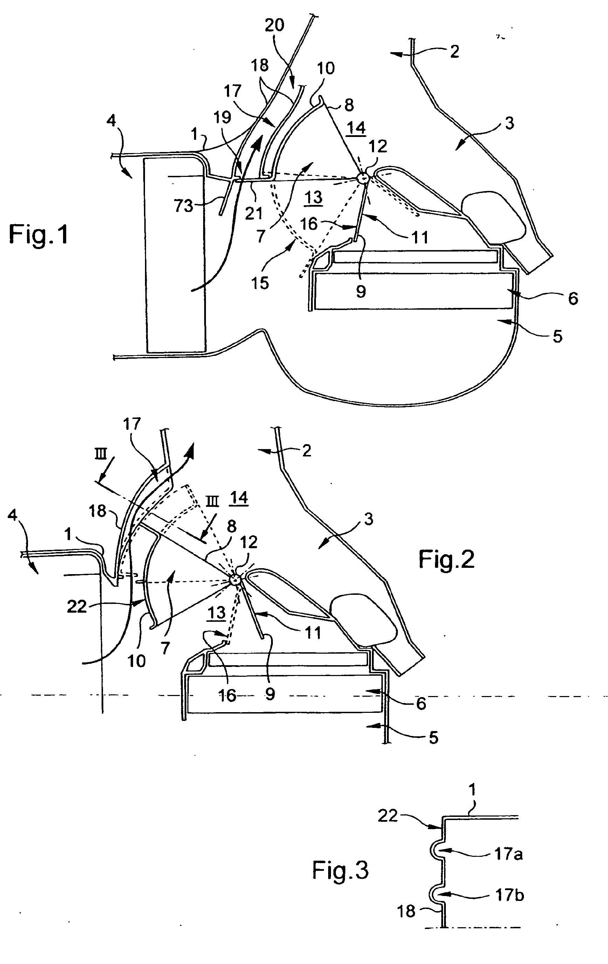

On se réfère tout d'abord à la figure 1 pour décrire un premier mode de réalisation d'un dispositif de chauffage et/ou climatisation selon l'invention, pour un véhicule automobile.

Le dispositif illustré comprend un boîtier de traitement et distribution d'air 1 destiné à distribuer de l'air traité dans l'habitacle d'un véhicule automobile, au niveau de bouches de distribution (non représentées), par l'intermédiaire d'au moins deux conduits de distribution 2 et 3. Par exemple, le premier conduit de distribution 2 alimente des bouches de distribution placées dans le tableau de bord du véhicule et à la base du pare-brise, tandis que le second conduit de distribution 3 alimente des bouches de distribution placées au niveau des pieds des passagers.

Le boîtier 1 délimite un conduit d'alimentation en flux d'air froid 4 et un conduit d'alimentation en flux d'air chaud 5 tous deux alimentés en air froid ou recirculé. Le conduit d'alimentation en flux d'air chaud 5, également appelé conduit de réchauffage, loge un radiateur de chauffage 6 parcouru par un liquide chaud, qui est généralement le liquide servant au refroidissement du moteur du véhicule.

Le boîtier 1 délimite enfin une chambre de mixage d'air 7 communiquant avec les conduits d'alimentation 4 et 5 et avec les premier 2 et second 3 conduits de distribution.

Selon l'invention, le boîtier 1 loge des moyens de contrôle comprenant de premier 8 et second 9 volets munis chacun de parois d'obturation respectives 10 et 11. Dans ce premier exemple de réalisation, les premier 8 et second 9 volets sont montés pivotant autour d'un même axe de rotation 12 installé contre une cloison, à l'extrémité du conduit d'alimentation en flux d'air chaud 5. Ils peuvent ainsi être entraînés en rotation simultanément et dans la même direction pour gérer conjointement l'accès des flux d'air froid et flux d'air chaud à la chambre de mixage 7.

La chambre de mixage 7 est subdivisée en deux parties dites amont 13 et aval 14. L'accès à la partie amont 13 est contrôlé par les premier 8 et second 9 volets.

L'axe de rotation 12 et donc les volets 8 et 9 peuvent être entraînés en rotation entre une première position, matérialisée en traits pleins, dans laquelle la paroi d'obturation 10 du premier volet 8 libère complètement la sortie 15 du conduit d'alimentation en flux d'air froid 4 afin que le flux d'air froid puisse accéder à la partie amont 13 de la chambre de mixage 7, tandis que dans le même temps la paroi d'obturation 11 du second volet 9 obstrue complètement la sortie 16 du conduit de réchauffage 5, interdisant ainsi l'accès du flux d'air chaud à la chambre de mixage 7 (position fermée), et une seconde position, matérialisée en traits interrompus, dans laquelle la paroi d'obturation 10 du premier volet 8 obstrue complètement la sortie 15 du conduit d'alimentation en flux d'air froid 4 afin d'interdire l'accès du flux d'air froid à la partie amont 13 de la chambre de mixage 7, tandis que dans le même temps la paroi d'obturation 11 du second volet 9 libère complètement la sortie 16 du conduit de réchauffage 5 afin que le flux d'air chaud puisse pénétrer dans la partie amont 13 via la sortie 16 (position ouverte).

En d'autres termes, dans la première position seul le flux d'air froid alimente la chambre de mixage 7 et donc les premier 2 et second 3 conduits de distribution, tandis que dans la seconde position seul le flux d'air chaud alimente la chambre de mixage 7 et donc les premier 2 et second 3 conduits de distribution.

Bien entendu, on prévoit au moins une position intermédiaire dans laquelle chacune des sorties 15 et 16 est partiellement obstruée, de sorte que la partie amont 13 soit alimentée en flux d'air froid et flux d'air chaud en vue d'un mélange (ou mixage).

Préférentiellement, comme illustré, dans ce premier mode de réalisation le premier volet 8 est de type tambour, et le second volet 9 est de type drapeau. Par ailleurs, les premier 8 et second 9 volets constituent avantageusement un ensemble tambour-drapeau qui peut être de type monobloc.

Selon l'invention, le dispositif comprend également des moyens de canalisation qui sont ici réalisés sous la forme d'un canal 17 délimité par des parois 18 du boîtier 1. Ce canal 17 comprend une entrée 19, qui débouche dans la partie d'extrémité aval du conduit d'alimentation en flux d'air froid 4, à proximité de la partie amont 13 de la chambre de mixage 7, et une sortie 20, qui débouche dans la partie aval 14 de la chambre de mixage 7. Ici, le conduit ne comprend qu'une seule sortie 20, débouchant à proximité du premier conduit de distribution 2. Mais, cette sortie pourrait être située à proximité du second conduit de distribution 3. Le canal 17 pourrait également comporter deux sorties débouchant respectivement au voisinage des premier 2 et second 3 conduits de distribution.

L'accès à l'entrée 19 du canal 17 est contrôlé par une partie conformée 21 du premier volet 8. Par exemple, la partie conformée 21 fait saillie à perpendicularité de la paroi d'obturation 10 du premier volet 8.

On peut également prévoir au voisinage de l'entrée 19 du canal 17, comme illustré, un déflecteur de calibration 73 destiné à calibrer le volume du flux d'air froid admis dans le canal 17 en fonction de la position du premier volet 8. Ici, grâce au déflecteur 73, plus l'entrée 15 est obstruée par le premier volet 8, plus le volume admis dans le canal 17 est important.

L'extraction d'une partie du flux d'air froid et sa canalisation jusqu'au voisinage de l'entrée du premier conduit de distribution 2, à l'aide du canal 17, permet d'obtenir une différence de température importante entre l'air délivré par les bouches de distribution des pieds (alimentées par le second conduit de distribution 3) et l'air délivré par les autres bouches de distribution (alimentées par le premier conduit de distribution 2).

On se réfère maintenant aux figures 2 et 3 pour décrire un deuxième mode de réalisation d'un dispositif de chauffage et/ou climatisation selon l'invention, pour un véhicule automobile. Il s'agit d'une variante du premier mode de réalisation décrit ci-avant en référence à la figure 1, dans laquelle seul l'agencement des moyens de canalisation a été modifié. Par conséquent, tout ce qui a été dit pour le premier mode de réalisation demeure valable ici.

Dans ce deuxième mode de réalisation, on prévoit un ou plusieurs canaux 17 délimités à la fois par une paroi 18 du boîtier 1 et par la face externe 22 de la paroi d'obturation 10 du premier volet 8. Dans l'exemple illustré sur la figure 3, qui est une vue en coupe selon l'axe III-III de la figure 2, la paroi 18 du boîtier 1 est conformée (ou déformée) localement de manière à délimiter partiellement deux canaux 17a et 17b. Mais, dans une variante, on pourrait ne prévoir qu'un seul canal s'étendant sensiblement sur toute la hauteur de la paroi 18. On pourrait également prévoir plus de deux canaux.

Comme le premier mode de réalisation, ce deuxième mode de réalisation permet d'obtenir une différence de température importante entre l'air délivré par les bouches de distribution des pieds et l'air délivré par les autres bouches de distribution. Mais, il permet également de gérer l'alimentation en air froid de plusieurs sous-conduits du premier conduit de distribution 2, lorsque les moyens de canalisation comportent plusieurs canaux.

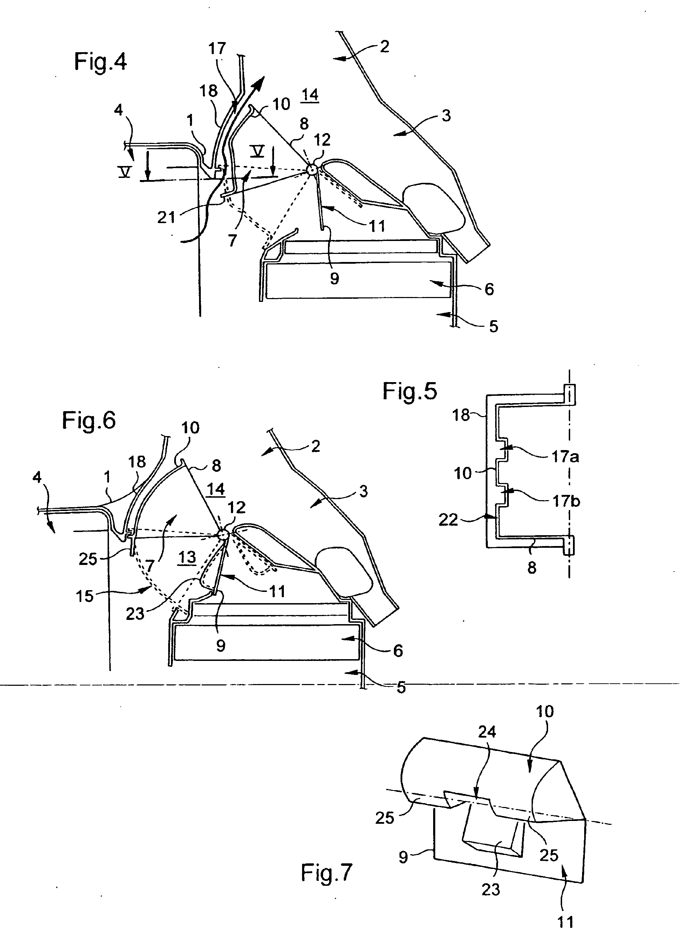

On se réfère maintenant aux figures 4 et 5 pour décrire un troisième mode de réalisation d'un dispositif de chauffage et/ou climatisation selon l'invention, pour un véhicule automobile. Il s'agit d'une variante du deuxième mode de réalisation décrit ci-avant en référence aux figures 2 et 3, dans laquelle seul l'agencement des moyens de canalisation a été modifié. Par conséquent, tout ce qui a été dit pour les premier et deuxième modes de réalisation demeure valable ici.

Dans ce troisième mode de réalisation, on prévoit un ou plusieurs canaux 17 délimités à la fois par une paroi 18 du boîtier 1 et par la face externe 22 de la paroi d'obturation 10 du premier volet 8. Dans l'exemple illustré sur la figure 5, qui est une vue en coupe selon l'axe V-V de la figure 4, la paroi d'obturation 10 du premier volet 8 est conformée (ou déformée) localement de manière à délimiter partiellement deux canaux 17a et 17b. Mais, dans une variante, on pourrait ne prévoir qu'un seul canal s'étendant sensiblement sur toute la hauteur de la paroi d'obturation 10. On pourrait également prévoir plus de deux canaux.

Comme le deuxième mode de réalisation, ce troisième mode de réalisation permet d'obtenir une différence de température importante entre l'air délivré par les bouches de distribution des pieds et l'air délivré par les autres bouches de distribution. Mais, il permet également de gérer l'alimentation en air froid de plusieurs sous-conduits du premier conduit de distribution 2, lorsque les moyens de canalisation comportent plusieurs canaux. En raison du caractère mobile des canaux 17, ce mode de réalisation permet en outre de faciliter la gestion de la stratification de température entre les différentes bouches de distribution.

Il est important de noter que l'on peut combiner les deuxième et troisième modes de réalisation afin de délimiter chaque canal 17 à l'aide de parties conformées (ou déformées) de la paroi 18 du boîtier 1 et de la paroi d'obturation 10 du premier volet 8.

On se réfère maintenant aux figures 6 et 7 pour décrire un quatrième mode de réalisation d'un dispositif de chauffage et/ou climatisation selon l'invention, pour un véhicule automobile. Ce quatrième mode de réalisation reprend une grande partie des éléments constituant le premier mode de réalisation décrit précédemment en référence à la figure 1. Par conséquent, des éléments du dispositif de la figure 6 sensiblement identiques à ceux du dispositif de la figure 1 portent des références identiques.

Dans ce quatrième mode de réalisation, les moyens de canalisation ne comprennent plus de canal d'extraction, bien que cela puisse s'envisager. Ici, les moyens de canalisation comportent un élément déflecteur 23 placé sur la paroi d'obturation du second volet 9. Cet élément déflecteur 23 peut s'étendre sur toute la hauteur de la paroi d'obturation 11 du second volet 9. Mais, comme cela est illustré sur la figure 7, il est préférable que son extension soit locale. Cela permet en effet de compléter les moyens de canalisation par une ou plusieurs ouvertures 24 et parois d'interception 25 destinées à coopérer avec l'élément déflecteur 23 pour canaliser des parties des flux d'air froid et d'air chaud selon des niveaux différents.

Plus précisément, dans l'exemple illustré sur la figure 7, l'élément déflecteur 23 est placé sensiblement au centre de la paroi d'obturation 11 du second volet 9. Il est par exemple réalisé par déformation ou conformation de la paroi d'obturation 11. La paroi d'obturation 10 du premier volet 8 comporte dans une partie d'extrémité une ouverture centrale 24 placée sensiblement au même niveau que l'élément déflecteur 23 et d'extension sensiblement égale à la sienne. Cette ouverture 23 est ainsi délimitée de part et d'autre par deux parois déflectrices latérales 25.

Lorsque le premier volet 8 est dans une position intermédiaire, deux portions du flux d'air chaud sont canalisées de part et d'autre de l'élément déflecteur 23 entre la paroi d'obturation 11 et les parois déflectrices 25, tandis qu'une troisième portion dudit flux d'air chaud est défléchie par l'élément déflecteur 23 et canalisée entre cet élément déflecteur 23 et la paroi d'obturation 10, via l'ouverture 24. On peut ainsi générer des flux d'air mixé dont les températures diffèrent en fonction du niveau. Bien entendu, la canalisation des portions de flux d'air chaud s'effectue également lorsque le premier volet est dans sa position fermée (matérialisée par les pointillés).

Ce quatrième mode de réalisation permet notamment de faciliter la gestion de la linéarité et de la stratification de température entre les différentes bouches de distribution.

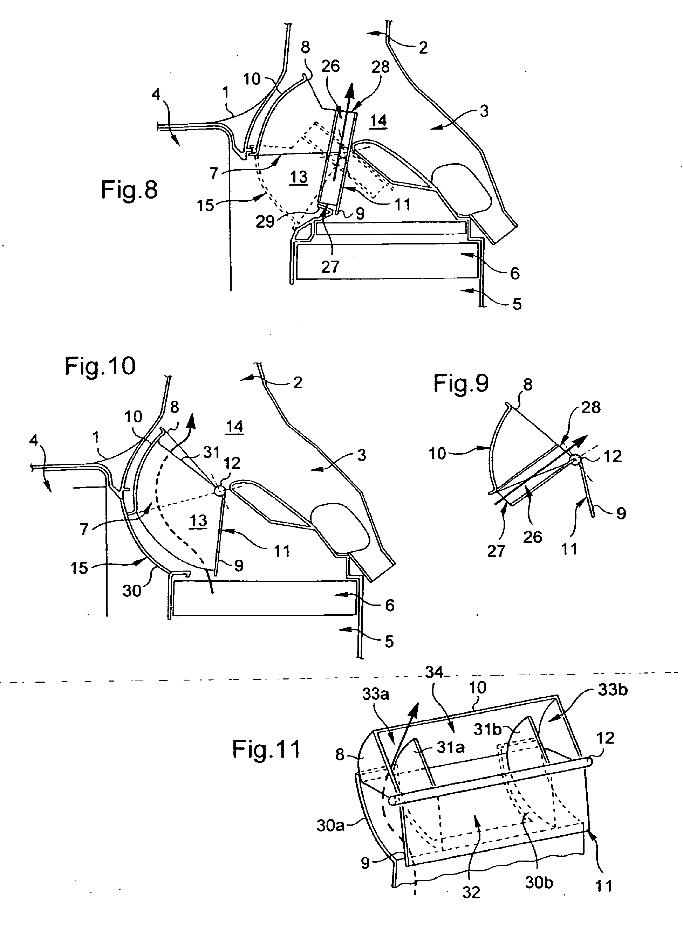

On se réfère maintenant aux figures 8 et 9 pour décrire un cinquième mode de réalisation d'un dispositif de chauffage et/ou climatisation selon l'invention, pour un véhicule automobile. Ce cinquième mode de réalisation reprend une grande partie des éléments constituant le premier mode de réalisation décrit précédemment en référence à la figure 1. Par conséquent, des éléments du dispositif de la figure 8 sensiblement identiques à ceux du dispositif de la figure 1 portent des références identiques.

Dans ce cinquième mode de réalisation, les moyens de canalisation comprennent un canal mobile 26 porté par l'un des premier 8 et second 9 volets.

Dans l'exemple illustré sur la figure 8, le canal mobile 26 est porté par le second volet 9. Il fait préférentiellement partie intégrante de celui-ci et s'étend sur une hauteur choisie, qui peut être éventuellement égale à celle de la paroi d'obturation 11 qui le porte.

Il comprend une entrée 27 et au moins une sortie 28. Lorsque le second volet 9 est dans sa position fermée (en traits pleins), l'entrée 27 est obstruée par une partie conformée 29 d'une cloison du boîtier 1, et la sortie 28 débouche dans la partie aval 14 de la chambre de mixage 7. En revanche, lorsque le second volet 9 est dans une position intermédiaire ou dans sa position ouverte (en pointillés), l'entrée 27 débouche dans la partie d'extrémité aval du conduit d'alimentation en flux d'air chaud 5 (en aval du radiateur 6), et la sortie 28 débouche dans la partie amont 13 de la chambre de mixage 7. Dans les positions intermédiaires l'air chaud qui est canalisé dans le canal mobile 26 n'est pas mélangé à l'air froid dans la partie amont 13 de la chambre de mixage 7. En revanche, l'air chaud qui est canalisé de part et d'autre du canal mobile 26 peut être mélangé à l'air froid au niveau de la partie amont 13 de la chambre de mixage 7.

Dans l'exemple illustré sur la figure 9, le canal mobile 26 est porté par le premier volet 8. Il fait préférentiellement partie intégrante de celui-ci et s'étend sur une partie seulement de la hauteur de la paroi d'obturation 10, à un niveau choisi.

Il comprend également une entrée 27 et au moins une sortie 28. Lorsque le premier volet 8 est dans sa position ouverte (en traits pleins), l'entrée 27 est obstruée par une partie conformée d'une cloison du boîtier 1, et la sortie 28 débouche dans la partie aval 14 de la chambre de mixage 7, au voisinage de l'entrée du second conduit de distribution 3. En revanche, lorsque le premier volet 8 est dans une position intermédiaire ou dans sa position ouverte, l'entrée 27 est obstruée par la partie conformée 29 de la cloison du boîtier ou bien elle débouche dans la partie d'extrémité aval du conduit d'alimentation en air froid 4, et la sortie 28 débouche dans une zone centrale de la partie aval 14 de la chambre de mixage 7. Dans les positions intermédiaires, l'air froid qui est canalisé dans le canal mobile 26 n'est pas mélangé à l'air chaud dans la partie amont 13 de la chambre de mixage 7. En revanche, l'air froid qui est canalisé de part et d'autre du canal mobile 26 peut être mélangé à l'air chaud au niveau de la partie amont 13 de la chambre de mixage 7.

Ce cinquième mode de réalisation permet également, et notamment, de faciliter la gestion de la linéarité et de la stratification de température entre les différentes bouches de distribution.

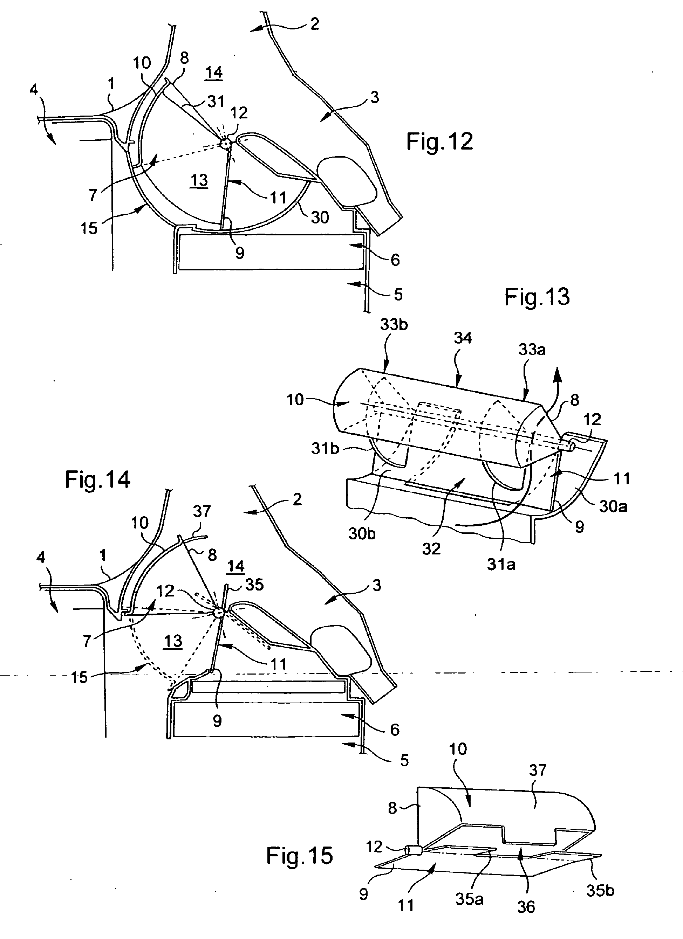

On se réfère maintenant aux figures 10 et 11 pour décrire un sixième mode de réalisation d'un dispositif de chauffage et/ou climatisation selon l'invention, pour un véhicule automobile. Ce sixième mode de réalisation reprend une grande partie des éléments constituant le premier mode de réalisation décrit précédemment en référence à la figure 1. Par conséquent, des éléments du dispositif de la figure 10 sensiblement identiques à ceux du dispositif de la figure 1 portent des références identiques.

Dans ce sixième mode de réalisation, les moyens de canalisation comportent au moins une nervure de canalisation 30 (paroi auxiliaire) coopérant avec au moins une cloison transversale 31 (perpendiculaire au plan de la paroi d'obturation 11 du second volet 9 et à la paroi d'obturation 10 du premier volet 8). Chaque nervure de canalisation 30 interdit partiellement et de façon permanente l'accès à la partie amont 13 de la chambre de mixage 7, au niveau de la sortie 15 du conduit d'alimentation en flux d'air froid 4. Par ailleurs, chaque cloison transversale s'étend préférentiellement de la paroi d'obturation 11 du second volet 9 jusqu'au voisinage (au moins) de l'extrémité de la paroi d'obturation 10 du premier volet 8.

Plus précisément, dans l'exemple illustré sur la figure 11, on prévoit deux nervures de canalisation 30a et 30 b respectivement placées aux niveaux inférieur et supérieur du boîtier 1 en ménageant un passage central 32 à un niveau intermédiaire. Deux cloisons transversales 31a et 31b sont solidarisées aux premier 8 et second 9 volets en deux endroits latéraux opposés, de manière à encadrer le passage central 32 et à définir avec les deux nervures 30a et 30b trois canaux (deux latéraux 33a et 33b et un central 34).

Lorsque le premier volet 8 est dans sa position ouverte, seul de l'air froid peut pénétrer dans la partie amont 13 de la chambre de mixage 7. Cet air froid est alors canalisé par le canal central 34 jusque dans la partie aval 14 de la chambre de mixage 7, au voisinage de l'entrée du premier conduit de distribution 2. Lorsque le premier volet 8 est dans une position intermédiaire, de l'air froid et de l'air chaud peuvent pénétrer dans la partie amont 13 de la chambre de mixage 7, via le canal central 34, tandis que de l'air chaud est canalisé dans les canaux latéraux 33a et 33b. Ces trois flux d'air canalisés et superposés sont délivrés dans la zone aval 14 de la chambre de mixage 7.

Ce sixième mode de réalisation permet également, et notamment, de faciliter la gestion de la linéarité et de la stratification de température entre les différentes bouches de distribution.

On se réfère maintenant aux figures 12 et 13 pour décrire un septième mode de réalisation d'un dispositif de chauffage et/ou climatisation selon l'invention, pour un véhicule automobile. Il s'agit d'une variante du sixième mode de réalisation décrit ci-avant en référence aux figures 10 et 11.

Ce qui différencie ce septième mode de réalisation du sixième, c'est la position des nervures de canalisation 30 dans le boîtier 1. Ici, chaque nervure de canalisation 30 interdit partiellement et de façon permanente l'accès à la partie amont 13 de la chambre de mixage 7, au niveau de la sortie 16 du conduit d'alimentation en flux d'air chaud 5. Tout le reste est identique.

Lorsque le second volet 9 est dans sa position ouverte, seul de l'air chaud peut pénétrer dans la partie amont 13 de la chambre de mixage 7. Cet air chaud est alors canalisé par le canal central 34 jusque dans la partie amont 13 de la chambre de mixage 7. Lorsque le second volet 9 est dans une position intermédiaire, de l'air froid et de l'air chaud peuvent pénétrer dans la partie amont 13 de la chambre de mixage 7, via le canal central 34, tandis que de l'air froid est canalisé dans les canaux latéraux 33a et 33b. Ces trois flux d'air canalisés et superposés sont délivrés dans la zone aval 14 de la chambre de mixage 7.

Ce septième mode de réalisation permet également, et notamment, de faciliter la gestion de la linéarité et de la stratification de température entre les différentes bouches de distribution.

On se réfère maintenant aux figures 14 et 15 pour décrire un huitième mode de réalisation d'un dispositif de chauffage et/ou climatisation selon l'invention, pour un véhicule automobile. Ce huitième mode de réalisation reprend une grande partie des éléments constituant le premier mode de réalisation décrit précédemment en référence à la figure 1. Par conséquent, des éléments du dispositif de la figure 14 sensiblement identiques à ceux du dispositif de la figure 1 portent des références identiques.

Dans ce huitième mode de réalisation, les moyens de canalisation comportent au moins une première paroi auxiliaire 35 solidaire du second volet 9. Cette paroi auxiliaire 35 est placée dans la partie aval 14 de la chambre de mixage 7 et canalise une partie du flux d'air froid et/ou une partie du flux d'air chaud vers une zone de cette partie aval 14 dont la position varie en fonction des positions des premier 8 et second 9 volets.

Dans l'exemple illustré sur la figure 15, le second volet 9 est prolongé par deux parois auxiliaires 35a et 35b espacées l'une de l'autre en définissant entre elles un passage 36. Par ailleurs, dans cet exemple, les moyens de canalisation comprennent également une paroi auxiliaire 37 qui prolonge une extrémité de la paroi d'obturation 10 du premier volet 8 dans la partie aval 14. Cette paroi auxiliaire 37 est préférentiellement placée sensiblement au niveau du passage 36. Ainsi, les parois auxiliaires 35a, 35b et 37 peuvent coopérer ensemble pour définir trois sorties (deux latérales et une centrale) propres à délivrer des parties de flux d'air froid et/ou de flux d'air chaud sensiblement de la même température mais dans des directions différentes. Plus précisément, les sorties latérales délivrent des flux orientés vers l'entrée du premier conduit de distribution 2, tandis que la sortie centrale délivre un flux orienté vers l'entrée du second conduit de distribution 3.

Une telle coopération entre parois auxiliaires portées par des volets différents n'est pas obligatoire.

Ce huitième mode de réalisation permet de privilégier l'alimentation en flux d'air de certaines bouches de distribution.

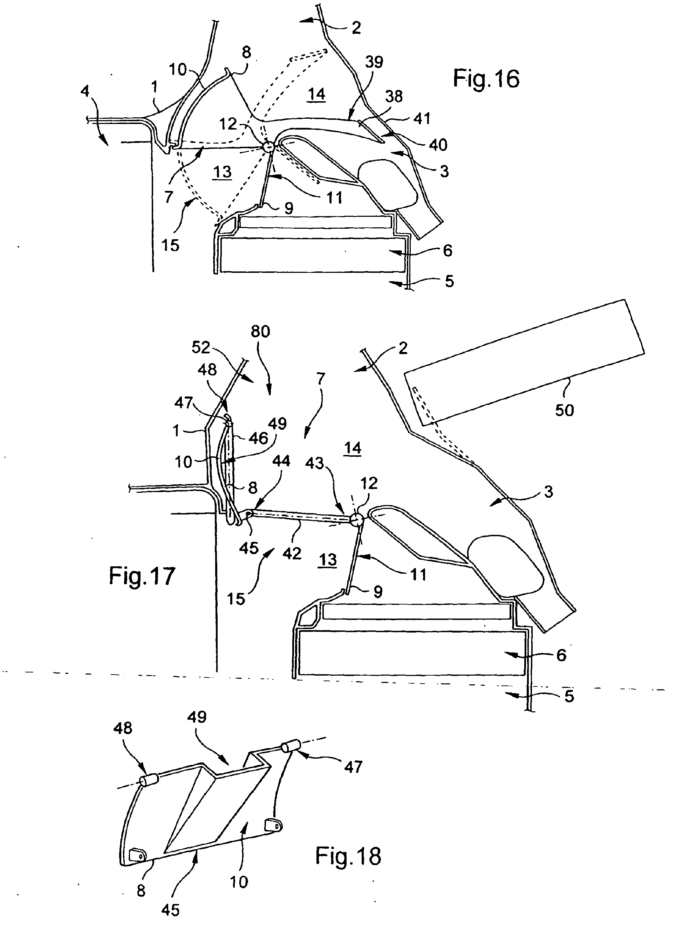

On se réfère maintenant à la figure 16 pour décrire un neuvième mode de réalisation d'un dispositif de chauffage et/ou climatisation selon l'invention, pour un véhicule automobile. Ce neuvième mode de réalisation reprend une grande partie des éléments constituant le premier mode de réalisation décrit précédemment en référence à la figure 1. Par conséquent, des éléments du dispositif de la figure 16 sensiblement identiques à ceux du dispositif de la figure 1 portent des références identiques.

Dans ce neuvième mode de réalisation, les moyens de canalisation comprennent une paroi auxiliaire 38 solidaire du premier volet 8 et placée dans la partie aval 14 de la chambre de mixage 7. Cette paroi auxiliaire 38 est chargée de canaliser une partie du flux d'air froid et/ou une partie du flux d'air chaud vers une zone de la partie aval 14 dont la position varie en fonction des positions des premier 8 et second 9 volets.

Dans l'exemple illustré, la paroi auxiliaire 38 est conformée de manière à faciliter l'alimentation en air chaud, ou en air mixte (ou mélangé), du second conduit de distribution 3 lorsque le second volet 9 est dans sa position ouverte, et pour s'effacer dans le circuit d'air lorsque le premier volet 8 est dans sa position ouverte (dans ce cas, le flux d'air froid qui se dirige vers le premier conduit de distribution 2 n'est pas perturbé).

Ce neuvième mode de réalisation permet non seulement de privilégier l'alimentation en flux d'air de certaines bouches de distribution, mais également de faciliter la gestion de la stratification de température dans les différentes bouches de distribution.

On se réfère maintenant aux figures 17 et 18 pour décrire un dixième mode de réalisation d'un dispositif de chauffage et/ou climatisation selon l'invention, pour un véhicule automobile. Ce dixième mode de réalisation reprend une grande partie des éléments constituant le premier mode de réalisation décrit précédemment en référence à la figure 1. Par conséquent, des éléments du dispositif de la figure 17 sensiblement identiques à ceux du dispositif de la figure 1 portent des références identiques.

Dans ce dixième mode de réalisation, les moyens de canalisation comportent tout d'abord une tige rigide (ou bras) 42 munie d'une première extrémité 43 solidarisée à l'axe de rotation 12 et d'une seconde extrémité 44 montée à rotation sur une première extrémité 45 du premier volet 8. Ils comprennent également un chemin de came 46, ici de forme sensiblement linéaire, installé sur la paroi de fond 52 du boîtier 1 dans la chambre de mixage 7, et dans lequel peut se déplacer un axe de rotation 47 monté sur une seconde extrémité 48 du premier volet 8, de manière à permettre son déplacement dans la partie aval 14 de la chambre de mixage 7.

Comme illustré sur la figure 18, le premier volet 8 peut être de type drapeau. Il peut être sensiblement plan ou bien arrondi (comme illustré).

Lorsque la tige 42 est entraînée en rotation de sa position ouverte (illustrée sur la figure 17) vers sa position fermée (dans laquelle elle obstrue complètement la sortie 15 du conduit d'alimentation en flux d'air froid 4), la seconde extrémité 48 du premier volet 8 se translate dans le chemin de came 46 tandis que sa première extrémité 45 est entraînée en rotation. Une partie du flux d'air froid et/ou du flux d'air chaud est ainsi canalisée vers une zone 80 de la partie aval 14.

En variante, et comme illustré sur la figure 18, le premier volet 8, de type drapeau, peut comporter une partie conformée (ou une déformation locale) définissant un canal ouvert 49. La forme du canal 49 est choisie en fonction de l'environnement. La partie conformée est par ailleurs placée à un niveau choisi en fonction des besoins. Elle peut être centrée (comme illustré), ou bien décentrée.

Dans cette variante, une partie du flux d'air froid et/ou du flux d'air chaud est canalisée par le canal ouvert 49 vers la zone 80 de la partie aval 14 de la chambre de mixage 7 dont la position varie en fonction des positions respectives des premier 8 et second 9 volets.

Dans une autre variante, on peut envisager que le premier volet 8 définisse deux canaux 49, par exemple latéraux.

Ce dixième mode de réalisation permet de déporter le conduit de distribution 2 pour échapper à une contrainte liée à l'implantation d'un équipement du véhicule, comme par exemple un ensemble audio 50.

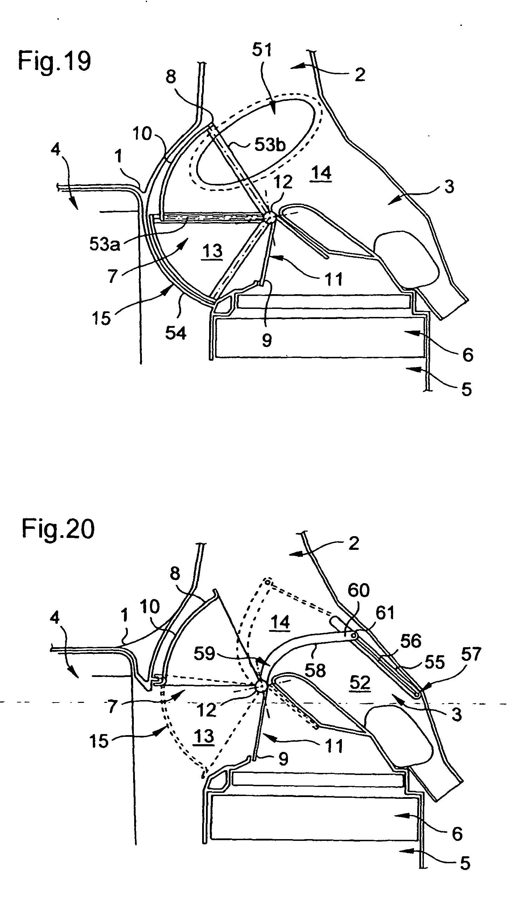

On se réfère maintenant à la figure 19 pour décrire un onzième mode de réalisation d'un dispositif de chauffage et/ou climatisation selon l'invention, pour un véhicule automobile. Ce onzième mode de réalisation reprend une grande partie des éléments constituant le premier mode de réalisation décrit précédemment en référence à la figure 1. Par conséquent, des éléments du dispositif de la figure 19 sensiblement identiques à ceux du dispositif de la figure 1 portent des références identiques.

Dans ce onzième mode de réalisation, l'une au moins des parois latérales inférieure et supérieure du volet tambour 8, en forme de secteur et reliant sa paroi d'obturation 10 à l'axe de rotation 12, est remplacée par deux bras (ou tiges) 53a et 53b reliant ledit axe de rotation 12 aux extrémités respectives de la paroi d'obturation 10. Ces bras 53a et 53b sont agencés de manière à permettre la canalisation d'une partie du flux d'air froid et/ou du flux d'air chaud vers les faces latérales de la chambre de mixage 7.

Dans une variante, le premier volet tambour 8 peut être adapté de manière à permettre l'alimentation en flux d'air d'au moins une sortie latérale 51 formée dans une paroi de fond 52 du boîtier 1, dans la partie aval 14 de la chambre de mixage 7, de manière à alimenter un conduit latéral. Le volet tambour 8 étant évidé sur l'une au moins de ses faces latérales du fait de la présence des bras (ou tiges) 53a et 53b, il dispose ainsi de moyens de canalisation permettant de canaliser une partie du flux d'air froid et/ou une partie du flux d'air chaud vers la sortie (ou bouche) latérale 51.

Comme cela est illustré sur la figure 19, le dispositif peut également comporter une paroi auxiliaire fixe (ou nervure) 54 obstruant partiellement l'accès du flux d'air froid à la chambre de mixage, au niveau de la sortie 15 du conduit d'alimentation en flux d'air froid 4. Cette paroi auxiliaire 54 de faible extension définit une surface sur laquelle la face externe 22 de la paroi d'obturation 10 peut s'appuyer de manière à assurer une bonne étanchéité vis-à-vis de l'air froid lorsque le premier volet 8 est dans sa position fermée (matérialisée en pointillés).

On se réfère maintenant à la figure 20 pour décrire un douzième mode de réalisation d'un dispositif de chauffage et/ou climatisation selon l'invention, pour un véhicule automobile. Ce douzième mode de réalisation reprend une grande partie des éléments constituant le premier mode de réalisation décrit précédemment en référence à la figure 1. Par conséquent, des éléments du dispositif de la figure 20 sensiblement identiques à ceux du dispositif de la figure 1 portent des références identiques.

Dans ce douzième mode de réalisation, les moyens de canalisation comprennent tout d'abord un chemin de came 55 installé sur la paroi de fond 52 du boîtier 1 dans la partie aval 14, voire même dans la partie amont du second conduit de distribution 3. Ils comprennent également une paroi de canalisation 56 sur laquelle est monté un premier axe 57 destiné à se déplacer dans le chemin de came 55 et un bras (ou tige) de liaison 58 comprenant une première extrémité 59 solidaire de l'axe de rotation 12 et une seconde extrémité 60 pourvue d'un second axe 61 couplé à la paroi de canalisation 56 de manière à la déplacer dans la partie aval 14.

Lorsque le premier volet 8 est entraîné en rotation de sa position ouverte vers sa position fermée (ou une position intermédiaire), il est suivi par le bras de liaison 58, lequel contraint la paroi de canalisation 56 à se déplacer (ou coulisser) dans la partie aval 14. Une partie au moins du flux d'air froid et/ou une partie du flux d'air chaud qui circule dans le premier volet 8 est ainsi canalisée vers une zone de la partie aval 14 dont la position varie en fonction des positions des premier 8 et second 9 volets. En fait, dans la configuration illustrée, plus le second volet 9 est ouvert, plus la température du flux d'air chaud est élevée, et plus ce flux est contraint à se diriger vers le second conduit de distribution 3.

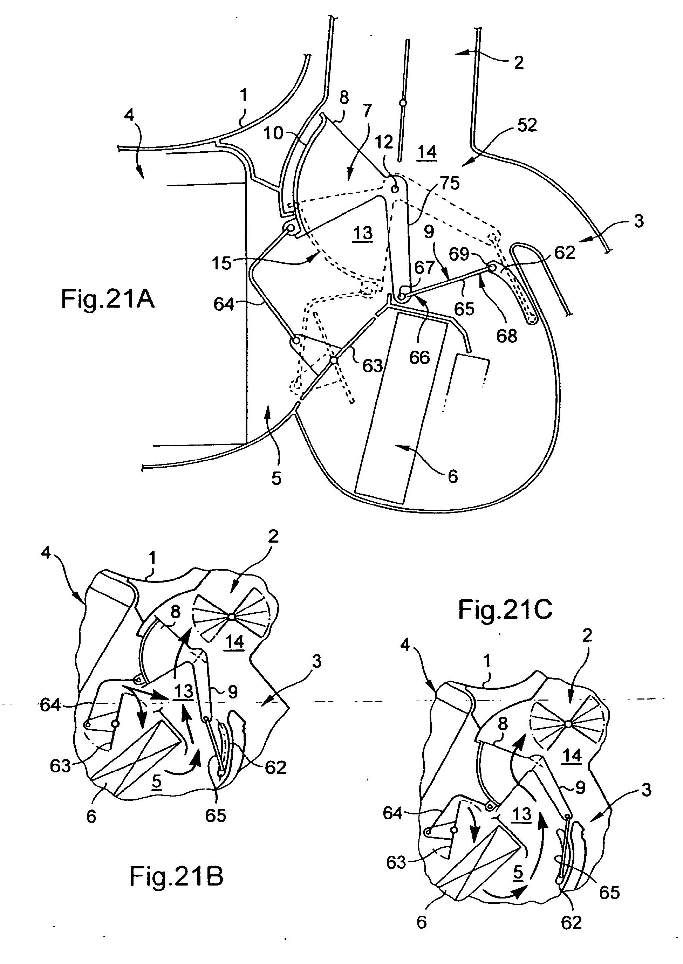

On se réfère maintenant aux figures 21A à 21C pour décrire un treizième mode de réalisation d'un dispositif de chauffage et/ou climatisation selon l'invention pour un véhicule automobile. Ce treizième mode de réalisation reprend une grande partie des éléments constituant le premier mode de réalisation décrit précédemment en référence à la figure 1. Par conséquent, des éléments du dispositif de la figure 21 sensiblement identiques à ceux du dispositif de la figure 1 portent des références identiques.

Dans ce treizième mode de réalisation, les moyens de canalisation comprennent tout d'abord un chemin de came 62 installé sur la paroi de fond 52 du boîtier 1 dans le conduit d'alimentation en flux d'air chaud 5, en aval du radiateur 6. Ils comprennent également un troisième volet 63, installé à l'interface entre l'extrémité aval du conduit d'alimentation en flux d'air froid 4 et une partie amont du conduit d'alimentation en flux d'air chaud 5, placée en amont du radiateur 6. Ce troisième volet 63 est couplé par une tige de liaison (ou bras) 64 au premier volet 8. Il est par exemple de type papillon. Selon sa position, il gère l'accès d'une partie au moins du flux d'air froid à la partie amont 13 de la chambre de mixage 7 (figures 21A et 21B) et/ou à la partie amont du conduit d'alimentation en flux d'air chaud 5 (figures 21B et 21C). Enfin, le second volet 9 constitue ici une partie des moyens de canalisation. Il se présente sous la forme d'une paroi auxiliaire 65 comportant une première extrémité 66, pourvue d'un premier axe 67 monté à rotation sur un bras 75 du premier volet 8, et une seconde extrémité 68, pourvue d'un second axe 69 destiné à se déplacer dans le chemin de came 62 de manière à canaliser une partie du flux d'air froid et/ou une partie du flux d'air chaud vers une zone de la partie amont 13 de la chambre de mixage 7.

Lorsque le premier volet 8 est dans sa position ouverte (figure 21A) seul le flux d'air froid peut pénétrer dans la partie amont 13 de la chambre de mixage 7, où il est contraint par la paroi auxiliaire 65 du second volet 9 et par le premier volet 8 à rejoindre la partie aval 14 de la chambre de mixage 7. Cela permet d'éviter un phénomène dit de réchauffage (ou "re-heat"). Lorsque le premier volet 8 est entraîné en rotation de sa position ouverte vers sa position fermée (ou une position intermédiaire illustrée sur la figure 21B), il entraîne la tige de liaison 64, contraignant ainsi le troisième volet 63 à s'ouvrir. Dans le même temps, le bras 75 entraîne la première extrémité 66 de la paroi auxiliaire 65, contraignant ainsi le second axe 69 de sa seconde extrémité 68 à se translater (ou coulisser) dans le chemin de came 62. Une partie du flux d'air froid pénètre alors dans la partie amont 13 de la chambre de mixage 7, tandis que la partie complémentaire pénètre dans la partie amont du conduit d'alimentation en flux d'air chaud 5 où il est réchauffé par le radiateur 6 et acheminé jusqu'à ladite partie amont 13 par la paroi auxiliaire 65. Enfin, lorsque le premier volet 8 est dans sa position fermée (figure 21C), le flux d'air froid pénètre dans la partie amont du conduit d'alimentation en flux d'air chaud 5 où il est réchauffé par le radiateur 6 et acheminé jusqu'à ladite partie amont 13 par la paroi auxiliaire 65.

Ce treizième mode de réalisation permet d'augmenter le volume d'air chaud en mode "tout chaud" à destination du second conduit de distribution 3 et favorise le mélange d'air froid et d'air chaud dans les positions intermédiaires. En outre, il permet d'obtenir deux vitesses d'ouverture différentes pour les premier 8 et troisième 63 volets et donc de faciliter la gestion de la linéarité de la température. Il facilite également l'implantation d'une sortie de distribution à l'avant du dispositif, y compris dans le cas d'un boîtier 1 de petites dimensions.

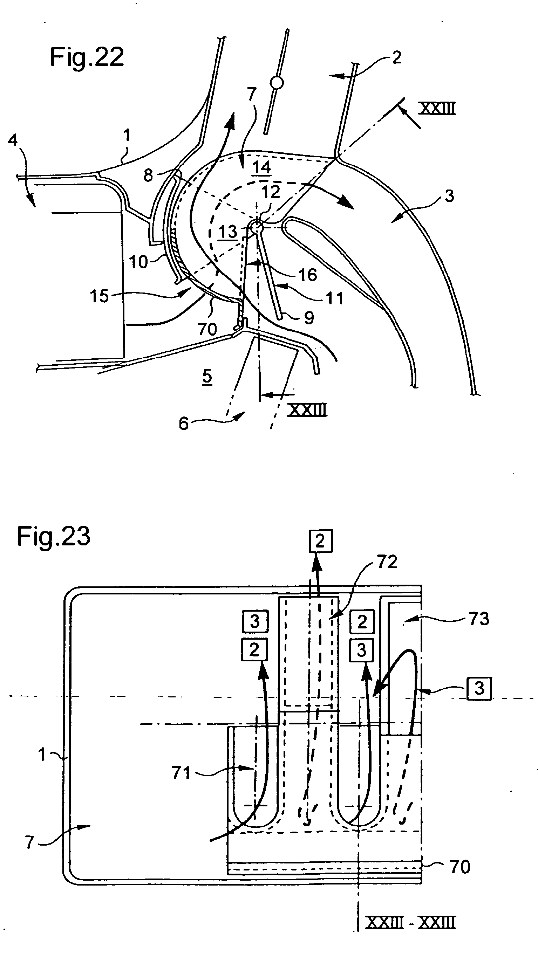

On se réfère maintenant aux figures 22 et 23 pour décrire un quatorzième mode de réalisation d'un dispositif de chauffage et/ou climatisation selon l'invention, pour un véhicule automobile. Ce quatorzième mode de réalisation reprend une grande partie des éléments constituant le premier mode de réalisation décrit précédemment en référence à la figure 1. Par conséquent, des éléments du dispositif de la figure 22 sensiblement identiques à ceux du dispositif de la figure 1 portent des références identiques.

Dans ce quatorzième mode de réalisation, les moyens de canalisation comprennent un répartiteur de flux d'air 70 placé dans la chambre de mixage 7 à la fois dans ses parties amont 13 et aval 14.

Comme illustré sur la coupe de la figure 23, le répartiteur de flux d'air 70 est constitué de cloisons solidaires entre-elles qui définissent des canaux 71 à 73 débouchant respectivement au voisinage des premier 2 et second 3 conduits de distribution. Le canal 71 est alimenté en flux d'air chaud par la sortie 16 du conduit d'alimentation en flux d'air chaud 5 et canalise l'air chaud jusqu'au niveau des premier 2 et second 3 conduits de distribution. Le canal 72 est alimenté en flux d'air froid par la sortie 15 du conduit d'alimentation en flux d'air froid 4 et canalise l'air froid jusqu'au niveau du premier conduit de distribution 2. Enfin, le canal 73 est alimenté en flux d'air froid par la sortie 15 du conduit d'alimentation en flux d'air froid 4 et canalise l'air froid jusqu'au niveau du second conduit de distribution 3. L'accès à ces conduits 71 à 73 est bien entendu contrôlé par les premier 8 et second 9 volets.

Ce quatorzième mode de réalisation permet d'alimenter sélectivement les différents conduits de distribution 2 et 3 en air froid ou en air chaud ou encore en un mélange d'air froid et d'air chaud, facilitant ainsi la gestion de l'aérothermie.

L'invention ne se limite pas aux modes de réalisation de dispositif de chauffage et/ou climatisation décrits ci-avant, seulement à titre d'exemple, mais elle englobe toutes les variantes que pourra envisager l'homme de l'art dans le cadre des revendications ci-après.

## Revendications

1. Dispositif de chauffage et/ou climatisation d'un habitacle, notamment de véhicule automobile, comprenant au moins un conduit d'alimentation en flux d'air froid (4), au moins un conduit d'alimentation en flux d'air chaud (5) logeant un radiateur de chauffage (6), au moins de premier (2) et second (3) conduits de distribution de flux d'air, au moins une chambre de mixage d'air (7) communiquant avec lesdits conduits d'alimentation en flux d'air froid et en flux d'air chaud et avec lesdits premier et second conduits de distribution, et des moyens de contrôle comprenant un premier (8) et deuxième (9) volets munis chacun de parois d'obturation respectives (10, 11) et montés pivotant autour d'un axe (12) pour gérer l'accès desdits flux d'air froid et flux d'air chaud à une partie amont (13) de ladite chambre de mixage (7), **caractérisé en ce qu**'il comprend des moyens de canalisation (17;23-25;26;30,31;35-37;49;53;55-61;62-69;70) propres à canaliser une partie au moins desdits flux d'air froid et/ou flux d'air chaud parvenant en amont de ladite chambre de mixage (7) pour la délivrer en au moins un endroit choisi de cette chambre de mixage.

2. Dispositif selon la revendication 1, **caractérisé en ce que** lesdits premier (8) et deuxième (9) volets sont montés pivotant autour dudit axe (12) de manière à être entraînés en rotation simultanément et dans la même direction pour gérer conjointement l'accès desdits flux d'air froid et flux d'air chaud à ladite partie amont (13) de ladite chambre de mixage (7).

3. Dispositif selon l'une des revendications 1 et 2, **caractérisé en ce que** ledit endroit choisi est placé dans une partie aval (14) de ladite chambre de mixage (7) et **en ce que** lesdits moyens de canalisation comprennent au moins un canal (17) comportant une entrée (19) débouchant en amont de ladite chambre de mixage (7) et au moins une sortie (20) débouchant au niveau dudit endroit choisi.

4. Dispositif selon la revendication 3, **caractérisé en ce que** ladite entrée (19) du canal (17) débouche dans ledit conduit d'alimentation en flux d'air froid (4), et **en ce que** l'accès à ladite entrée (19) est contrôlé par une partie conformée (21) dudit premier volet (8).

5. Dispositif selon l'une des revendications 3 et 4, **caractérisé en ce que** ledit canal (17) est défini par des parois (18) d'un boîtier (1).

6. Dispositif selon l'une des revendications 3 et 4, **caractérisé en ce que** ledit canal (17) est délimité par une paroi (18) dudit boîtier (1) et par une face externe (22) de la paroi d'obturation (10) dudit premier volet (8).

7. Dispositif selon la revendication 6, **caractérisé en ce que** ladite face externe (22) est conformée localement.

8. Dispositif selon la revendication 6, **caractérisé en ce que** ladite face externe (22) est conformée sur toute sa hauteur.

9. Dispositif selon l'une des revendications 6 à 8, **caractérisé en ce que** ladite paroi (18) du boîtier (1) est conformée localement.

10. Dispositif selon l'une des revendications 6 à 8, **caractérisé en ce que** ladite paroi (18) du boîtier (1) est conformée sur toute sa hauteur.

11. Dispositif selon l'une des revendications 3 à 10,
**caractérisé en ce que** ladite sortie (20) dudit canal (17) débouche à proximité d'une entrée dudit premier conduit de distribution (2).

12. Dispositif selon l'une des revendications 1 et 2, **caractérisé en ce que** ledit endroit choisi est placé dans une partie amont (13) de ladite chambre de mixage (7) et **en ce que** lesdits moyens de canalisation comprennent un déflecteur (23) placé sur ledit second volet (9) et destiné à canaliser une partie au moins du flux d'air chaud vers ledit endroit choisi lorsque ledit second volet (9) libère au moins partiellement l'accès à ladite chambre de mixage (7).

13. Dispositif selon la revendication 12, **caractérisé en ce que** ledit déflecteur (23) est constitué par une déformation de la paroi d'obturation (11) dudit second volet (9) sur toute sa hauteur.

14. Dispositif selon la revendication 12, **caractérisé en ce que** ledit déflecteur (23) est constitué par une déformation locale de la paroi d'obturation (11) dudit second volet (9).

15. Dispositif selon l'une des revendications 13 et 14, **caractérisé en ce que** lesdits moyens de canalisation comprennent une ouverture (24) constituée dans ladite paroi d'obturation (10) dudit premier volet (8).

16. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent au moins un canal (26) placé sur ledit second volet (9) et destiné à canaliser une partie au moins du flux d'air chaud vers ledit endroit choisi lorsque ledit second volet (9) libère au moins partiellement l'accès à ladite chambre de mixage (7).

17. Dispositif selon la revendication 16, **caractérisé en ce que** ledit canal (26) fait partie intégrante de la paroi d'obturation (11) dudit second volet (9).

18. Dispositif selon l'une des revendications 16 et 17, **caractérisé en ce que** ledit canal (26) s'étend sur toute la hauteur dudit second volet (9).

19. Dispositif selon l'une des revendications 16 et 17, **caractérisé en ce que** ledit canal (26) s'étend localement sur une partie de la hauteur de ladite paroi d'obturation (11) dudit second volet (9).

20. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent au moins un canal (26) placé sur ledit premier volet (8) et destiné à canaliser une partie au moins du flux d'air froid vers ledit endroit choisi lorsque ledit premier volet (8) libère au moins partiellement l'accès à ladite chambre de mixage (7).

21. Dispositif selon la revendication 20, **caractérisé en ce que** ledit canal (26) fait partie intégrante dudit premier volet (8).

22. Dispositif selon l'une des revendications 20 et 21, **caractérisé en ce que** ledit canal (26) s'étend localement sur une partie de la hauteur dudit second volet.

23. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent au moins une paroi auxiliaire fixe (30) obstruant partiellement l'accès dudit flux d'air froid à ladite chambre de mixage (7) et canalisant une partie dudit flux d'air chaud vers ledit endroit choisi lorsque ledit second volet (9) libère au moins partiellement l'accès à ladite chambre de mixage (7).

24. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent au moins une paroi auxiliaire fixe (30) obstruant partiellement l'accès dudit flux d'air chaud à ladite chambre de mixage (7) et canalisant une partie dudit flux d'air froid vers ledit endroit choisi lorsque ledit premier volet (8) libère au moins partiellement l'accès à ladite chambre de mixage (7).

25. Dispositif selon l'une des revendications 23 et 24, **caractérisé en ce que** lesdits moyens de canalisation comprennent au moins une cloison (31) placée dans un plan sensiblement perpendiculaire à ladite paroi d'obturation (11) dudit second volet (9) et agencée pour coopérer avec ladite paroi auxiliaire (30) pour canaliser ledit flux d'air chaud et/ou d'air froid.

26. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent au moins une première paroi auxiliaire (35) solidaire dudit second volet (9), placée dans ladite partie aval (14) et canalisant une partie dudit flux d'air froid et/ou une partie dudit flux d'air chaud vers une zone de ladite partie aval (14) dont la position varie en fonction des positions desdits premier (8) et second (9) volets.

27. Dispositif selon l'une des revendications 1, 2 et 26, **caractérisé en ce que** lesdits moyens de canalisation comprennent au moins une seconde paroi auxiliaire (37) prolongeant ladite paroi d'obturation (10) dudit premier volet (8) dans ladite partie aval (14) et canalisant une partie dudit flux d'air froid et/ou une partie dudit flux d'air chaud vers une zone de ladite partie aval (14) dont la position varie en fonction des positions desdits premier (8) et second (9) volets.

28. Dispositif selon l'une des revendications 26 et 27, **caractérisé en ce que** lesdites première (35) et seconde (37) parois auxiliaires sont placées à des niveaux différents de manière à canaliser lesdites parties de flux d'air à des niveaux différents de ladite zone.

29. Dispositif selon l'une des revendications 1 et 2, **caractérisé en ce que** ledit endroit choisi est placé dans une partie aval (14) de ladite chambre de mixage (7), et **en ce que** lesdits moyens de canalisation comprennent un élément de canalisation (38) solidaire dudit premier volet (8), placé dans ladite partie aval (14) et propre à canaliser une partie dudit flux d'air froid et/ou une partie dudit flux d'air chaud vers une zone de ladite partie aval (14) dont la position varie en fonction des positions desdits premier (8) et second (9) volets.

30. Dispositif selon la revendication 29, **caractérisé en ce que** ladite zone est placée à proximité d'une entrée dudit premier conduit de distribution (2).

31. Dispositif selon l'une des revendications 1 et 2, **caractérisé en ce qu**'il comprend une tige (42), dont une première extrémité (43) est solidarisée audit axe de rotation (12) et une seconde extrémité (44) est montée à rotation sur une première extrémité (45) dudit premier volet (8), et un chemin de came (46) dans lequel peut se déplacer un axe de rotation (47) monté sur une seconde extrémité (48) dudit premier volet (8) de manière à permettre son déplacement dans ladite partie aval (14) de la chambre de mixage (7).

32. Dispositif selon la revendication 31, **caractérisé en ce que** ladite paroi d'obturation (10) dudit premier volet (8) comporte une déformation locale définissant un canal (49) communiquant avec ladite chambre de mixage (7) et propre à canaliser une partie dudit flux d'air froid et/ou une partie dudit flux d'air chaud vers une zone de ladite partie aval (14) dont la position varie en fonction des positions desdits premier (8) et second (9) volets.

33. Dispositif selon la revendication 32, **caractérisé en ce que** ladite paroi d'obturation (10) dudit volet (8) est agencée pour canaliser une partie dudit flux d'air froid et/ou une partie dudit flux d'air chaud vers une zone (80) de ladite partie aval (14).

34. Dispositif selon l'une des revendications 1 et 2, **caractérisé en ce que** ledit premier volet (8) comporte au moins deux tiges (53a, 53b) solidarisées d'une part à sa paroi d'obturation (10) et d'autre part audit axe de rotation (12) et agencées de manière à permettre la canalisation d'une partie dudit flux d'air froid et/ou d'une partie dudit flux d'air chaud vers l'une au moins des faces latérales délimitant ladite chambre de mixage (7) .

35. Dispositif selon la revendication 34, **caractérisé en ce qu**'il comprend au moins une sortie latérale (51) placée dans une partie aval (14) de la chambre de mixage (7), et en ce que lesdites tiges (53a, 53b) sont agencées de manière à permettre la canalisation d'une partie dudit flux d'air froid et/ou d'une partie dudit flux d'air chaud vers ladite bouche latérale (51).

36. Dispositif selon l'une des revendications 34 et 35, **caractérisé en ce qu**'il comprend une paroi auxiliaire fixe (54) obstruant partiellement l'accès dudit flux d'air froid à ladite chambre de mixage (7) et propre à permettre l'appui de la paroi d'obturation (10) dudit premier volet (8) en vue d'interdire tout accès dudit flux d'air froid à ladite chambre de mixage (7) lorsque ledit premier volet (8) est dans une position fermée.

37. Dispositif selon l'une des revendications 1 et 2, **caractérisé en ce que** ledit endroit choisi est placé dans une partie aval (14) de ladite chambre de mixage (7), **en ce que** lesdits moyens de canalisation comprennent un chemin de came (55) placé dans ladite partie aval (14), une paroi de canalisation (56) sur laquelle est monté un axe (57) propre à se déplacer dans ledit chemin de came (55) et une tige (58) dont une première extrémité (59) est solidaire dudit axe de rotation (12) et une seconde extrémité (60) est montée à rotation sur ladite paroi de canalisation (56) de manière à la déplacer dans ladite partie aval (14) pour qu'elle canalise une partie dudit flux d'air froid et/ou une partie dudit flux d'air chaud vers une zone de ladite partie aval (14) dont la position varie en fonction des positions desdits premier (8) et second (9) volets.

38. Dispositif selon l'une des revendications 1 et 2, **caractérisé en ce que** lesdits moyens de canalisation comprennent, d'une première part, un chemin de came (62) placé en aval dudit radiateur (6) dans ledit conduit d'alimentation en flux d'air chaud (5), d'une deuxième part, un troisième volet (63) couplé par une tige de liaison (64) audit premier volet (8) et gérant l'accès, selon sa position, d'une partie au moins dudit flux d'air froid à la partie amont (13) de ladite chambre de mixage (7) et/ou à une partie dudit conduit d'alimentation en flux d'air chaud (5) placée en amont dudit radiateur (6), et d'une troisième part, une paroi auxiliaire (65) constituant ledit second volet (9) et comportant une première extrémité (66) pourvue d'un premier axe (67) monté à rotation sur ledit second volet (9), et une seconde extrémité (68) pourvue d'un second axe (69) propre à se déplacer dans ledit chemin de came (62) de manière à canaliser conjointement une partie dudit flux d'air froid et/ou une partie dudit flux d'air chaud vers une zone d'une partie amont (13) de la chambre de mixage (7).

39. Dispositif selon la revendication 38, **caractérisé en ce que** ledit troisième volet (63) est un volet papillon.

40. Dispositif selon l'une des revendications 1 et 2, **caractérisé en ce que** lesdits moyens de canalisation comprennent des cloisons (70) solidaires entre-elles, installées dans ladite chambre de mixage et définissant dans celle-ci des canaux (71-73) alimentés en flux d'air froid et/ou en flux d'air chaud selon les positions respectives desdits premier (8) et second (9) volets et propres à délivrer le flux d'air froid et/ou le flux d'air chaud en des zones respectives différentes de la partie aval (14) de la chambre de mixage (7) en fonction de leurs localisations respectives.

41. Dispositif selon l'une des revendications 1 à 40, **caractérisé en ce que** ledit premier volet (8) est un volet tambour.

42. Dispositif selon l'une des revendications 1 à 41, **caractérisé en ce que** ledit second volet (9) est un volet drapeau.

## Claims

1. Passenger compartment heating and/or air conditioning device, particularly for a motor car, including at least one cold airflow feed pipe (4), at least one hot airflow feed pipe (5) housing a heating radiator (6), at least first (2) and second (3) airflow distribution pipes, at least one air mixing chamber (7) communicating with said cold airflow and hot airflow feed pipes and with said first and second distribution pipes, and control means including a first (8) and second (9) flap each fitted with respective shutter walls (10, 11) and mounted to swivel around an axis (12) to manage the access of said cold airflows and hot airflows to an upstream part (13) of said mixing chamber (7), **characterised in that** it includes channelling means (17; 23-25; 26; 30, 31; 35-37; 49; 53; 55-61; 62-69; 70) conducive to channelling a part at least of said cold airflows and/or hot airflows arriving upstream of said mixing chamber (7) so as to deliver it to at least one selected location of this mixing chamber.

2. Device according to claim 1, **characterised in that** said first (8) and second (9) flaps are mounted to swivel around said axis (12) so as to be driven in rotation simultaneously and in the same direction in order to manage jointly the access of said cold airflows and hot airflows to said upstream part (13) of said mixing chamber (7).

3. Device according to one of claims 1 and 2, **characterised in that** said selected location is placed in a downstream part (14) of said mixing chamber (7) and that said channelling means include at least one channel (17) comprising an inlet (19) emerging upstream of said mixing chamber (7) and at least one outlet (20) emerging at said selected location.

4. Device according to claim 3, **characterised in that** said inlet (19) of the channel (17) emerges in said cold airflow feed pipe (4), and **in that** the access to said inlet (19) is controlled by a conformed part (21) of said first flap (8).

5. Device according to one of claims 3 and 4, **characterised in that** said channel (17) is defined by walls (18) of an enclosure (1).

6. Device according to one of claims 3 and 4, **characterised in that** said channel (17) is delimited by a wall (18) of said enclosure (1) and by an external surface (22) of the shutter wall (10) of said first flap (8).

7. Device according to claim 6, **characterised in that** said external surface (22) is conformed locally.

8. Device according to claim 6, **characterised in that** said external surface (22) is conformed over its full height.

9. Device according to one of claims 6 to 8, **characterised in that** said wall (18) of the enclosure (1) is conformed locally.

10. Device according to one of claims 6 to 8, **characterised in that** said wall (18) of the enclosure (1) is conformed over its full height.

11. Device according to one of claims 3 to 10, **characterised in that** said outlet (20) of said channel (17) emerges in proximity to an inlet of said first distribution pipe (2).

12. Device according to one of claims 1 and 2, **characterised in that** said selected location is placed in an upstream part (13) of said mixing chamber (7) and **in that** said channelling means include a deflector (23) placed on said second flap (9) and intended to channel a part at least of the hot airflow towards said selected location when said second flap (9) unblocks at least partially the access to said mixing chamber (7).

13. Device according to claim 12, **characterised in that** said deflector (23) is constituted by a deformation of the shutter wall (11) of said second flap (9) over its full height.

14. Device according to claim 12, **characterised in that** said deflector (23) is constituted by a local deformation of the shutter wall (11) of said second flap (9).

15. Device according to one of claims 13 and 14, **characterised in that** said channelling means include an opening (24) constituted in said shutter wall (10) of said first flap (8).

16. Device according to one of claims 1 and 2, **characterised in that** said selected location is placed in a downstream part (14) of said mixing chamber (7), and **in that** said channelling means include at least one channel (26) placed on said second flap (9) and intended to channel a part at least of the hot airflow towards said selected location when said second flap (9) unblocks at least partially the access to said mixing chamber (7).

17. Device according to claim 16, **characterised in that** said channel (26) is an integral part of the shutter wall (11) of said second flap (9).

18. Device according to one of claims 16 and 17, **characterised in that** said channel (26) extends over the full height of said second flap (9).

19. Device according to one of claims 16 and 17, **characterised in that** said channel (26) extends locally over a part of the height of said shutter wall (11) of said second flap (9).

20. Device according to one of claims 1 and 2, **characterised in that** said selected location is placed in a downstream part (14) of said mixing chamber (7), and **in that** said channelling means include at least one channel (26) placed on said first flap (8) and intended to channel a part at least of the cold airflow towards said selected location when said first flap (8) unblocks at least partially the access to said mixing chamber (7).

21. Device according to claim 20, **characterised in that** said channel (26) is an integral part of said first flap (8).

22. Device according to one of claims 20 and 21, **characterised in that** said channel (26) extends locally over a part of the height of said second flap.

23. Device according to one of claims 1 and 2, **characterised in that** said selected location is placed in a downstream part (14) of said mixing chamber (7), and **in that** said channelling means include at least one fixed auxiliary wall (30) partially blocking the access of said cold airflow to said mixing chamber (7) and channelling a part of said hot airflow towards said selected location when said second flap (9) unblocks at least partially the access to said mixing chamber (7).

24. Device according to one of claims 1 and 2, **characterised in that** said selected location is placed in a downstream part (14) of said mixing chamber (7), and **in that** said channelling means include at least one fixed auxiliary wall (30) partially blocking the access of said hot airflow to said mixing chamber (7) and channelling a part of said cold airflow towards said selected location when said first flap (8) unblocks at least partially the access to said mixing chamber (7).

25. Device according to one of claims 23 and 24, **characterised in that** said channelling means include at least one partition (31) placed in a plane substantially perpendicular to said shutter wall (11) of said second flap (9) and arranged to engage with said auxiliary wall (30) in order to channel said hot and/or cold airflow.

26. Device according to one of claims 1 and 2, **characterised in that** said selected location is placed in a downstream part (14) of said mixing chamber (7), and **in that** said channelling means include at least one first auxiliary wall (35) integral with said second flap (9), placed in said downstream part (14) and channelling a part of said cold airflow and/or a part of said hot airflow towards an area of said downstream part (14) the position of which varies as a function of the positions of said first (8) and second (9) flaps.

27. Device according to one of claims 1, 2 and 26, **characterised in that** said channelling means include at least one second auxiliary wall (37) extending said shutter wall (10) of said first flap (8) in said downstream part (14) and channelling a part of said cold airflow and/or a part of said hot airflow towards an area of said downstream part (14) the position of which varies as a function of the positions of said first (8) and second (9) flaps.

28. Device according to one of claims 26 and 27, **characterised in that** said first (35) and second (37) auxiliary walls are placed at different levels so as to channel said airflow parts to different levels of said area.

29. Device according to one of claims 1 and 2, **characterised in that** said selected location is placed in a downstream part (14) of said mixing chamber (7), and **in that** said channelling means include a channelling component (38) integral with said first flap (8), placed in said downstream part (14) and conducive to channelling a part of said cold airflow and/or a part of said hot airflow towards an area of said downstream part (14) the position of which varies as a function of the positions of said first (8) and second (9) flaps.

30. Device according to claim 29, **characterised in that** said area is placed in proximity to an inlet of said first distribution pipe (2).

31. Device according to one of claims 1 and 2, **characterised in that** it includes a rod (42), of which a first end (43) is anchored to said rotation axis (12) and a second end (44) is mounted in rotation on a first end (45) of said first flap (8), and a cam run (46) in which an axis of rotation (47) mounted on a second end (48) of said first flap (8) is able to move so as to allow its movement in said downstream part (14) of the mixing chamber (7).

32. Device according to claim 31, **characterised in that** said shutter wall (10) of said first flap (8) comprises a local deformation defining a channel (49) communicating with said mixing chamber (7) and conducive to channelling a part of said cold airflow and/or a part of said hot airflow towards an area of said downstream part (14) the position of which varies as a function of the positions of said first (8) and second (9) flaps.

33. Device according to claim 32, **characterised in that** said shutter wall (10) of said flap (8) is arranged to channel a part of said cold airflow and/or a part of said hot airflow towards an area (80) of said downstream part (14) .

34. Device according to one of claims 1 and 2, **characterised in that** said first flap (8) comprises at least two rods (53a, 53b) anchored on the one hand to its shutter wall (10) and on the other hand to said axis of rotation (12) and arranged so as to allow the channelling of a part of said cold airflow and/or of a part of said hot airflow towards one at least of the lateral surfaces delimiting said mixing chamber (7).

35. Device according to claim 34, **characterised in that** it includes at least one lateral outlet (51) placed in a downstream part (14) of the mixing chamber (7), and **in that** said rods (53a, 53b) are arranged so as to allow the channelling of a part of said cold airflow and/or a part of said hot airflow towards said lateral mouth (51).

36. Device according to one of claims 34 and 35, **characterised in that** it includes a fixed auxiliary wall (54) partially blocking the access of said cold airflow to said mixing chamber (7) and conducive to allowing support for the shutter wall (10) of said first flap (8) with a view to preventing any access of said cold airflow to said mixing chamber (7) when said first flap (8) is in a closed position.

37. Device according to one of claims 1 and 2, **characterised in that** said selected location is placed in a downstream part (14) of said mixing chamber (7), **in that** said channelling means include a cam run (55) placed in said downstream part (14), a channelling wall (56) on which is mounted an axis (57) conducive to moving in said cam run (55) and a rod (58) of which a first end (59) is integral with said axis of rotation (12) and a second end (60) is mounted in rotation on said channelling wall (56) so as to move it in said downstream part (14) so that it channels a part of said cold airflow and/or a part of said hot airflow towards an area of said downstream part (14) the position of which varies as a function of the positions of said first (8) and second (9) flaps.

38. Device according to one of claims 1 and 2, **characterised in that** said channelling means include, on the first hand, a cam run (62) placed downstream of said radiator (6) in said hot airflow feed pipe (5), on the second hand, a third flap (63) coupled by a connecting rod (64) with said first flap (8) and managing the access, according to its position, of a part at least of said cold airflow to the upstream part (13) of said mixing chamber (7) and/or to a part of said hot airflow feed pipe (5) placed upstream of said radiator (6), and on the third hand, an auxiliary wall (65) constituting said second flap (9) and comprising a first end (66) provided with a first axis (67) mounted in rotation on said second flap (9), and a second end (68) provided with a second axis (69) conducive to moving in said cam run (62) so as to jointly channel a part of said cold airflow and/or a part of said hot airflow towards an area of an upstream part (13) of the mixing chamber (7).

39. Device according to claim 38, **characterised in that** said the third flap (63) is a butterfly flap.

40. Device according to one of claims 1 and 2, **characterised in that** said channelling means include partitions (70) integral with each other, installed in said mixing chamber and defining therein channels (71-73) supplied with cold airflows and/or hot airflows according to the respective positions of said first (8) and second (9) flaps and conducive to delivering the cold airflow and/or the hot airflow to respective different areas of the downstream part (14) of the mixing chamber (7) as a function of their respective locations.

41. Device according to one of claims 1 to 40, **characterised in that** said first flap (8) is a drum flap.

42. Device according to one of claims 1 to 41, **characterised in that** said second flap (9) is a feathered flap.

## Patentansprüche

1. Einrichtung zur Heizung und/oder Klimatisierung eines Wohnraumes, insbesondere eines Fahrzeuges, enthaltend mindestens einen Kanal zur Speisung mit einer Strömung von kalter Luft (4), mindestens einen Kanal zur Speisung mit einer Strömung von warmer Luft (5) beinhaltend einen Heizkörper (6), mindestens einen ersten (2) und zweiten (3) Kanal zur Verteilung der Luftströmung, mindestens eine Mischkammer (7) in Verbindung stehend mit besagten Kanälen der Speisung mit einer Strömung von kalter Luft und einer Strömung von warmer Luft und mit besagten ersten und zweiten Verteilungskanälen, und Kontrollmitteln enthaltend eine erste (8) und eine zweite (9) Klappe wovon jede ausgestattet ist mit jeweiligen Trennwänden (10,11) und montiert drehend um eine Achse (12) um zu verwalten besagte Kaltluf-tströmungen und Warmluftströmungen zu einem davorliegenden Teil (13) besagter Mischkammer (7), **dadurch gekennzeichnet dass** sie Kanalisierungsmittel enthält (17;23-25;26;30,31;35-37;49;53;55-61;62-69;70) fähig zu kanalisieren wenigstens einen Teil besagter Kaltlufströmungen und/oder Warmluftströmungen ankommend vor besagter Mischkammer (7) um sie abzuliefern in wenigstens einem ausgewählten Ort dieser Mischkammer.

2. Einrichtung nach Anspruch 1, **dadurch gekennzeichnet dass** besagte erste (8) und zweite (9) Klappen drehend montiert sind auf besagter Achse (12) auf eine Weise dass sie gleichzeitig drehend betätigt werden und in der gleichen Richtung um zu verwalten gleichzeitig den Zugang besagter Kaltluftströmungen und Warmluftströmungen zu besagtem davorliegendem Teil (13) besagter Mischkammer (7).

3. Einrichtung nach einem der Ansprüche 1 und 2, **dadurch gekennzeichnet dass** besagter ausgewählter Ort ausgewählt ist in einem davorliegenden Teil (14) besagter Mischkammer (7) und **dadurch** dass besagte Kanalisierungsmittel beinhalten wenigstens einen Kanal (17) enthaltend einen Eingang (19) endend vor besagter Mischkammer (7) und wenigstens einen Ausgang (20) endend an besagtem ausgewählten Ort.

4. Einrichtung nach Anspruch 3, **dadurch gekennzeichnet dass** besagter Eingang (19) des Kanals (17) endet in besagtem Speisungskanal mit kalter Luft (4), und **dadurch** dass der Zugang zu besagtem Eingang (19) kontrolliert wird durch ein angepasstes Teil (21) besagter erster Klappe (8).

5. Einrichtung nach einem der Ansprüche 3 und 4, **dadurch gekennzeichnet dass** besagter Kanal (17) definiert ist durch die Wände (18) eines Gehäuses (1).

6. Einrichtung nach einem der Ansprüche 3 und 4, **dadurch gekennzeichnet dass** besagter Kanal (17) begrenzt ist durch eine Wand (18) besagten Gehäuses (1) und durch eine Außenwand (22) der Trennwand (10) besagter erster Klappe (8).

7. Einrichtung nach Anspruch 6, **dadurch gekennzeichnet dass** besagte Außenwand (22) lokal angepasst ist.

8. Einrichtung nach Anspruch 6, **dadurch gekennzeichnet dass** besagte Außenwand (22) auf der gesamten Höhe angepasst ist.

9. Einrichtung nach einem der Ansprüche 6 bis 8, **dadurch gekennzeichnet dass** besagte Wand (18) des Gehäuses (1) lokal angepasst ist.

10. Einrichtung nach einem der Ansprüche 6 bis 8, **dadurch gekennzeichnet dass** besagte Wand (18) des Gehäuses (1) auf der gesamten Höhe angepasst ist.

11. Einrichtung nach einem der Ansprüche 3 bis 10, **dadurch gekennzeichnet dass** besagter Ausgang (20) besagten Kanals (17) endet in der Nähe eines Eingangs besagten ersten Verteilerkanals (2).

12. Einrichtung nach einem der Ansprüche 1 und 2, **dadurch gekennzeichnet dass** besagter ausgewählter Ort sich in einem davorliegenden Teil (13) besagter Mischkammer (7) befindet und **dadurch** dass besagte Kanalisierungsmittel enthalten ein Leitblech (23) angebracht auf besagter Klappe (9) und bestimmt dazu zu kanalisieren einen Teil wenigstens der Warmluftströmung zu besagtem ausgewählten Ort wenn besagte zweite Klappe (9) freigibt wenigstens teilweise den Zugang zu besagter Mischkammer (7).

13. Einrichtung nach Anspruch 12, **dadurch gekennzeichnet dass** besagtes Leitblech (23) besteht aus einer Verformung der Trennwand (11) besagter zweiter Klappe (9) auf ihrer gesamten Höhe.

14. Einrichtung nach Anspruch 12, **dadurch gekennzeichnet dass** besagtes Leitblech (23) besteht aus einer lokalen Verformung der Trennwand (11) besagter zweiten Klappe (9).

15. Einrichtung nach einem der Ansprüche 13 und 14, **dadurch gekennzeichnet dass** besagte Kanalisierungsmittel enthalten eine Öffnung (24) gebildet in besagter Trennwand (10) besagter erster Klappe (8).

16. Einrichtung nach einem der Ansprüche 1 und 2, **dadurch gekennzeichnet dass** besagter ausgewählter Ort sich befindet in einem davorliegenden Teil (14) besagter Mischkammer (7), und **dadurch** dass besagte Kanalisierungsmittel enthalten wenigstens einen Kanal (26) angebracht auf besagter zweiter Klappe (9) und bestimmt dazu zu kanalisieren einen Teil wenigstens der Warmluftströmung zu besagtem ausgewählten Ort wenn besagte zweite Klappe (9) freigibt wenigstens teilweise den Zugang zu besagter Mischkammer (7).

17. Einrichtung nach Anspruch 16, **dadurch gekennzeichnet dass** besagter Kanal (26) Bestandteil ist der Trennwand (11) besagter zweiter Klappe (9).

18. Einrichtung nach einem der Ansprüche 16 und 17, **dadurch gekennzeichnet dass** besagter Kanal (26)sich ausdehnt auf der gesamten Höhe besagter zweiter Klappe (9).

19. Einrichtung nach einem der Ansprüche 16 und 17, **dadurch gekennzeichnet dass** besagter Kanal (26) sich lokal ausdehnt auf einem Teil der Höhe besagter Trennwand (11) besagter zweiter Klappe (9).

20. Einrichtung nach einem der Ansprüche 1 und 2, **dadurch gekennzeichnet dass** besagter ausgewählter Ort angebracht ist in einem danachliegenden Teil (14) besagter Mischkammer (7), und **dadurch** dass besagte Kanalisierungsmittel enthalten mindestens einen Kanal (26) angebracht auf besagter erster Klappe (8) und bestimmt dazu zu kanalisieren einen Teil wenigstens des kalten Luftstroms zu besagtem ausgewählten Ort wenn besagte erste Klappe (8) freigibt wenigstens teilweise den Zugang zu besagter Mischkammer (7).

21. Einrichtung nach Anspruch 20, **dadurch gekennzeichnet dass** besagter Kanal (26) Bestandteil ist besagter erster Klappe (8).

22. Einrichtung nach einem der Ansprüche 20 und 21, **dadurch gekennzeichnet dass** besagter Kanal (26) sich lokal ausdehnt auf einen Teil der Höhe besagter zweiter Klappe.

23. Einrichtung nach einem der Ansprüche 1 und 2, **dadurch gekennzeichnet dass** besagter ausgewählter Ort angebracht ist in einem danachliegenden Teil (14) besagter Mischkammer (7), und **dadurch** dass besagte Kanalisierungsmittel enthalten mindestens eine feststehende Nebenwand (30) welche teilweise blockiert den zugang besagten kalten Luftstroms zur besagten Mischkammer (7) und kanalisierend einen Teil besagter Warmluftströmung zu besagtem ausgewählten Ort wenn besagte zweite Klappe (9) freigibt wenigstens teilweise den Zugang zu besagter Mischkammer (7).

24. Einrichtung nach einem der Ansprüche 1 und 2, **dadurch gekennzeichnet dass** besagter ausgewählter Ort angebracht ist in einem danachliegenden Teil (14) besagter Mischkammer (7), und **dadurch** dass besagte Kanalisierungsmittel enthalten mindestens eine feststehende Nebenwand (30) welche teilweise blockiert den Zugang besagten warmen Luftstroms zu besagter Mischkammer (7) und kanalisierend einen Teil besagter Kaltluftströmung zu besagtem ausgewählten Ort wenn besagte erste Klappe (8) freigibt wenigstens teilweise den Zugang zu besagter Mischkammer (7).

25. Einrichtung nach einem der Ansprüche 23 und 24, **dadurch gekennzeichnet dass** besagte Kanalisierungsmittel enthalten mindestens eine Zwischenwand (31) angebracht in einer Ebene genau senkrecht zu besagter Trennwand (11) besagter zweiter Klappe (9) und eingerichtet um zusammenzuarbeiten mit besagter Nebenwand (30) um zu kanalisieren besagten warmen und/oder kalten Luftstrom.

26. Einrichtung nach einem der Ansprüche 1 und 2, **dadurch gekennzeichnet dass** besagter ausgewählter Ort angebracht ist in einem danachliegenden Teil (14) besagter Mischkammer (7), und **dadurch** dass besagte Kanalisierungsmittel enthalten mindestens eine erste Nebenwand (35) solidarisch mit besagter zweiter Klappe (9), angebracht in besagtem danachliegenden Teil (14) und kanalisierend einen Teil besagter Kaltluftströmung und/oder einen Teil besagter Warmluftströmung nach einer Zone besagten danachliegenden Teils (14) dessen Position sich ändert abhängig von den Positionen besagter ersten (8) und zweiten (9) Klappe.

27. Einrichtung nach einem der Ansprüche 1, 2 und 26, **dadurch gekennzeichnet dass** besagte Kanalisierungsmittel enthalten mindestens eine zweite Nebenwand (37) verlängernd besagte Trennwand (10) besagter erster Klappe (8) in besagtem danachliegenden Teil (14) und kanalisierend einen Teil besagten Kaltluftstroms und/oder einen Teil besagten Warmluftstroms nach einer Zone besagten danachliegenden Teils (14) dessen Position sich ändert abhängig von den Positionen besagter ersten (8) und zweiten (9) Klappen.

28. Einrichtung nach einem der Ansprüche 26 und 27, **dadurch gekennzeichnet dass** besagte erste (35) und zweite (37) Nebenwände angebracht sind auf verschiedenen Ebenen auf solche Weise dass sie kanalisieren besagte Teile der Luftströmung auf verschiedenen Ebenen besagter Zone.

29. Einrichtung nach einem der Ansprüche 1 und 2, **dadurch gekennzeichnet dass** besagter ausgewählter Ort angebracht ist in einem danachliegenden Teil (14) besagter Mischkammer (7), und **dadurch** dass besagte Kanalisierungsmittel enthalten ein Element zur Kanalisierung (38) solidarisch mit besagter erster Klappe (8), angebracht in besagtem danachliegenden Teil (14) und dazu bestimmt zu kanalisieren einen Teil besagter Kaltluftströmung und/oder einen Teil besagter Warmluftströmung nach einer Zone besagten danachliegenden Teils (14) dessen Position sich verändert abhängig von den Positionen besagter ersten (8) und zweiten (9) Klappen.

30. Einrichtung nach Anspruch 29, **dadurch gekennzeichnet dass** besagte Zone angebracht ist nahe bei dem Eingang besagten Verteilungskanals (2).

31. Einrichtung nach einem der Ansprüche 1 und 2, **dadurch gekennzeichnet dass** sie enthält eine Stange (42), deren erstes Ende (43) solidarisch ist mit besagter Drehachse (12) und ein zweites Ende (44) rotierend montiert ist auf einem ersten Ende (45) besagter erster Klappe (8), und ein Nockenweg (46) worin sich eine Drehachse (47) bewegen kann welche montiert ist auf einem zweiten Ende (48) besagter ersten Klappe (8) um deren Bewegung zu erlauben in besagtem danachliegenden Teil (14) der Mischkammer (7).

32. Einrichtung nach Anspruch 31, **dadurch gekennzeichnet dass** besagte Trennwand (10) besagter erster Klappe (8) eine lokale Verformung enthält welche einen Kanal (49) definiert welcher verbunden ist mit besagter Mischkammer (7) und dazu bestimmt zu kanalisieren einen Teil besagten kalten Luftstroms und/oder einen Teil besagten warmen Luftstroms in eine Zone des besagten danachliegenden Teils (14) dessen Position sich ändert abhängig von den Positionen besagter ersten (8) und zweiten (9) Klappen.

33. Einrichtung nach Anspruch 32, **dadurch gekennzeichnet dass** besagte Trennwand (10) besagter Klappe (8) eingerichtet ist zum kanalisieren eines Teils besagten kalten Luftstroms und/oder eines Teils besagten warmen Luftstroms nach einer Zone (80) besagten danachliegenden Teils (14).

34. Einrichtung nach einem der Ansprüche 1 und 2, **dadurch gekennzeichnet dass** besagte erste Klappe (8) enthält wenigstens zwei Stangen (53a, 53b) solidarisiert an einer Seite mit der Trennwand (10) und an der anderen Seite an besagter Drehachse (12) und eingerichtet auf solche Weise zu erlauben die Kanalisierung eines Teils besagten kalten Luftstroms und/oder einen Teil besagten warmen Luftstroms nach wenigstens einer der Seiten welche begrenzen besagte Mischkammer (7).

35. Einrichtung nach Anspruch 34, **dadurch gekennzeichnet dass** sie enthält wenigstens einen seitlichen Ausgang (51) angebracht in einem danachliegenden Teil (14) der Mischkammer (7), und **dadurch** dass besagte Stangen (53a, 53b) angebracht sind auf solche Weise dass sie erlauben die Kanalisierung eines Teils besagten kalten Luftstroms und/oder einen Teil besagten warmen Luftstroms nach besagter seitlicher Öffnung (51).

36. Einrichtung nach einem der Ansprüche 34 und 35, **dadurch gekennzeichnet dass** sie enthält eine feststehende Nebenwand (54) versperrend teilweise den Zugang besagten kalten Luftstroms zu besagter Mischkammer (7) und dazu bestimmt zu erlauben das Anlegen der Trennwand (10) besagter erster Klappe (8) dazu bestimmt zu verhindern jeglichen Zugang besagten kalten Luftstroms zu besagter Mischkammer (7) wenn besagte erste Klappe (8) in geschlossenem Zustand ist.

37. Einrichtung nach einem der Ansprüche 1 und 2, **dadurch gekennzeichnet dass** besagter ausgewählter Ort angebracht ist in einem danachliegenden Teil (14) besagter Mischkammer (7), **dadurch** dass besagte Kanalisierungsmittel enthalten einen Nockenweg (55) angebracht in besagtem danachliegendem Teil (14), eine Kanalisierungswand (56) worauf eine Achse montiert (57) ist dazu bestimmt sich in besagtem Nockenweg (55) zu bewegen und eine Stange (58) deren erstes Ende (59) solidarisch ist mit besagter Drehachse (12) und ein zweites Ende (60) montiert zur Drehung auf besagter Kanalisierungswand (56) auf solche Weise dass sie sich bewegt in besagtem danachliegenden Teil (14) damit sie kanalisiert einen Teil besagten kalten Luftstroms und/oder einen Teil besagten warmen Luftstroms nach einer Zone besagten danachliegenden Teils (14) deren Position sich verändert abhängig von den Positionen besagter erster (8) und zweiter (9) Klappen.

38. Einrichtung nach einem der Ansprüche 1 und 2, **dadurch gekennzeichnet dass** besagte Kanalisierungsmittel enthalten, zum ersten, einen Nockenweg (62) angebracht nach besagtem Heizkörper (6) in besagtem Speisungskanal des warmen Luftstroms (5), zum zweiten, eine dritte Klappe (63) gekoppelt mit einer Verbindungsstange (64)mit besagter ersten Klappe (8) und verwaltend den Zugang, je nach ihrer Position, wenigstens eines Teils besagten kalten Luftstroms nach dem davorliegenden Teil (13) besagter Mischkammer (7) und/oder zu einem Teil besagten Speisungskanals für den warmen Luftstrom (5) angebracht vor besagtem Heizkörper (6), und zum dritten, eine Nebenwand (65) darstellend besagte zweite Klappe (9) und beinhaltend ein erstes Ende (66) ausgestattet mit einer ersten Achse (67) drehend montiert auf besagter zweiter Klappe (9), und ein zweites Ende (68) ausgestattet mit einer zweiten Achse (69) vorgesehen um sich zu bewegen in besagtem Nockenweg (62) auf solche Weise dass er gleichzeitig kanalisieret einen Teil besagten kalten Luftstroms und/oder einen Teil besagten warmen Luftstroms nach einer Zone eines davorliegenden Teils (13) der Mischkammer (7).

39. Einrichtung nach Anspruch 38, **dadurch gekennzeichnet dass** besagte dritte Klappe (63) eine Schmetterlingsklappe ist.

40. Einrichtung nach einem der Ansprüche 1 und 2, **dadurch gekennzeichnet dass** besagte Kanalisierungsmittel enthalten Trennwände (70) solidarisch untereinander, installiert in besagter Mischkammer und in ihr bestimmend Kanäle (71-73) gespeist mit kaltem Luftstrom und/oder warmem Luftstrom je nach den respektiven Positionen besagter ersten (8) und zweiten (9) Klappen und bestimmt dazu zu liefern den kalten Luftstrom und/oder den warmen Luftstrom in respektive verschiedenen Zonen des davorliegenden Teils (14) der Mischkammer (7) abhängig von deren respektiven Lokalisierungen.

41. Einrichtung nach einem der Ansprüche 1 bis 40, **dadurch gekennzeichnet dass** besagte erste Klappe (8) eine Trommmelklappe ist.

42. Einrichtung nach einem der Ansprüche 1 bis 41, **dadurch gekennzeichnet dass** besagte zweite Klappe (9) eine Fahnenklappe ist.
